(19) **Europäisches Patentamt / European Patent Office / Office européen des brevets**

(11) **EP 2 752 457 A1**

(12) # EUROPEAN PATENT APPLICATION
published in accordance with Art. 153(4) EPC

(43) Date of publication:
**09.07.2014 Bulletin 2014/28**

(21) Application number: **12827001.4**

(22) Date of filing: **24.08.2012**

(51) Int Cl.:
*C08L 67/04* (2006.01)      *C08K 5/521* (2006.01)
*C08K 13/02* (2006.01)      *C08L 101/16* (2006.01)

(86) International application number:
**PCT/JP2012/005317**

(87) International publication number:
**WO 2013/031159 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2011   JP 2011185690**
          **28.02.2012   JP 2012040955**

(71) Applicant: **Toray Industries, Inc.**
**Tokyo, 103-8666 (JP)**

(72) Inventors:
• **SUDO, Ken**
  **Nagoya-shi**
  **Aichi 455-8502 (JP)**

• **TAKAHASHI, Yoshitake**
  **Tokai-shi**
  **Aichi 476-8567 (JP)**
• **KUMAZAWA, Sadanori**
  **Nagoya-shi**
  **Aichi 455-8502 (JP)**

(74) Representative: **Webster, Jeremy Mark**
**Mewburn Ellis LLP**
**33 Gutter Lane**
**London**
**EC2V 8AS (GB)**

(54) **POLYLACTIC ACID RESIN COMPOSITION, PROCESS FOR PRODUCING THE SAME, AND MOLDED PRODUCT COMPRISING THE SAME**

(57)    There is provided a polylactic acid resin composition, comprising 0.15 to 0.90 parts by weight of an organic nucleating agent (B) in addition to 100 parts by weight of a polylactic acid resin (A) comprised of a poly-L-lactic acid component and a poly-D-lactic acid component. The polylactic acid resin composition satisfies the following (i) to (v):

(i) amount of a linear oligomer of L-lactic acid and/or D-lactic acid is equal to or less than 0.3 parts by weight

(ii) rate of weight-average molecular weight retention is equal to or greater than 70% after the polylactic acid resin composition is retained in a closed state at 220°C for 30 minutes;

(iii) degree of stereocomplexation (Sc) exceeds 80%;

(vi) stereocomplex crystal melting heat quantity $\Delta Hmsc$ is equal to or greater than 30 J/g; and

(v) cooling crystallization heat quantity ($\Delta Hc$) is equal to or greater than 20 J/g.

EP 2 752 457 A1

## Description

Technical Field

The present invention relates to a polylactic acid resin composition, a production method thereof and a molded product made of the polylactic acid resin composition.

Background Art

Polylactic acids are polymers that are practically melt moldable and have the characteristic of biodegradability, so that development has been advanced as biodegradable polymers that are degraded in the natural environment after use to release carbon dioxide and water. The raw material of the polylactic acid is a renewable resource (biomass) derived from carbon dioxide and water. Recently, the carbon neutral characteristic of the polylactic acid that does not vary the quantity of carbon dioxide in the global environment even when carbon dioxide is released after use has been noted, and it has been expected to use the polylactic acid as the eco-friendly material. Additionally, lactic acid, which is the monomer of the polylactic acid, is producible at a low cost by the fermentation method using microorganisms, so that the polylactic acid has been examined as an alternative material of the petroleum-derived plastics.

Because of such characteristics, an attempt has been made for a wide range of practical applications of the polylactic acid as the melt molding material. The polylactic acid, however, has the lower heat resistance and the lower durability than petroleum-derived plastics and has the poor productivity due to the low crystallization rate. Accordingly the range of practical application has been significantly limited in the present circumstances. The crystallization treatment such as heat treatment of the polylactic acid molding material for the purpose of improving the heat resistance causes the problem of cloudiness and reduction of transparency. Accordingly it has been demanded to provide a polylactic acid molding material having the excellent heat resistance.

Using a polylactic acid stereocomplex has been noted as one of the means to solve such problems. The polylactic acid stereocomplex is formed by mixing optically active poly-L-lactic acid (hereinafter referred to as PLLA) and poly-D-lactic acid (hereinafter referred to as PDLA). The melting point of this polylactic acid stereocomplex is 210 to 220°C, which is higher by 40 to 50°C than the melting point 170°C of a polylactic acid homopolymer. By utilizing this characteristic, an attempt has been made to apply the polylactic acid stereocomplex to fibers of high melting point and high crystallinity, resin molded products and films of transparency.

The polylactic acid stereocomplex is generally formed by mixing PLLA and PDLA in solutions (hereinafter referred to as solution mixing) or by mixing PLLA and PDLA in the melt state under heating (hereinafter referred to as melt mixing under heating).

The technique of solution mixing PLLA and PDLA, however, requires volatilization of a solvent after mixing and thereby has the complicated manufacturing process. This causes the problem of high-cost formation of the polylactic acid stereocomplex. The technique of melt mixing PLLA and PDLA under heating, on the other hand, requires mixing at a temperature of sufficiently melting the polylactic acid stereocomplex. This temperature, however, accompanies thermal degradation reaction of polylactic acid and causes a linear low-molecular weight oligomer (hereinafter referred to as linear oligomer) as a by-product. The by-product causes a problem of reducing the molecular weight during melt retention. The presence of this by-product accelerates a thermal degradation reaction in the extrusion molding process and thereby has the disadvantage of significant deterioration of the thermal stability and the mechanical properties of a molded product.

The simple solution mixing technique or the simple melt mixing technique under heating also has the disadvantage of the low crystallization rate of a stereocomplex crystal after re-melting and the poor productivity. In other words, in order to ensure the heat resistance, it is required to cool down a mold for a long time in the molding process and to accelerate crystallization by annealing treatment of a molded product after molding. A low melting-point homo-crystal (single crystal) derived from PLLA or PDLA is produced concurrently with the stereocomplex crystal. This causes the problem of the cloudiness and the low transparency

By considering the foregoing, there has been a demand for a polylactic acid stereocomplex that has a less content of a linear oligomer, which affects the thermal stability and the appearance of a molded product, and strikes a balance between the molding processability and the crystallization rate, which affects the mechanical properties of a molded product.

Patent Document 1 includes description on the amount of lactic acid oligomer in a molded product obtained by molding a sheet made of a mixture of PLLA and PDLA. The description of Examples is, however, only related to lactide (cyclic dimer) but is not related to the linear oligomers.

In order to improve the crystallization rate and suppress generation of a homo-crystal, a method of adding an organic nucleating agent that selectively crystallizes a stereocomplex has conventionally been examined. For example, it has been shown that the method of adding 0.5 parts by weight of a metal phosphate as an organic nucleating agent relative to 100 parts by weight of a polylactic acid resin comprised of PLLA having the weight-average molecular weight of 180 thousand and PDLA having the weight-average molecular weight of 180 thousand, melt kneading the mixture and drying the melt-kneaded mixture at 120°C has the effects in improvement of the crystallization rate and in suppression of homo crystallization after re-melting (Patent Document 2, Examples). The metal phosphate, however, serves as a thermal degradation catalyst, simultaneously with serving as the organic nucleating agent. This causes the progress of thermal degradation reaction during melt kneading to reduce the molecular weight during melt kneading and generate a linear oligomer as the by-product. This accordingly has the disadvantage of the poor thermal stability and the poor appearance of a molded product.

It has also been shown that a high stereocomplex crystal ratio and high transparency are achieved by adding 0.05 to 0.1 parts by weight of a metal phosphate relative to 100 parts by weight of a polylactic acid resin comprised of PLLA having the weight-average molecular weight of 120 thousand and PDLA having the weight-average molecular weight of 120 thousand, melt kneading the mixture and stretching the melt-kneaded mixture to a sheet (Patent Document 3, Examples). This amount of addition, however, has an insufficient crystallization rate during cooling and causes a large amount of a homo-crystal by crystallization after re-melting. This composition accordingly has the disadvantage of inapplicability to unstretched molded products and injection molding applications requiring the high crystallization rate.

Additionally, a composition has been disclosed to add 0.5 to 1.0 parts by weight of a metal phosphate and 0.5 to 3.0 parts by weight of a polycarbodiimide compound relative to 100 parts by weight of a polylactic acid resin comprised of PLLA having the weight-average molecular weight of 156 thousand to 180 thousand and PDLA having the weight-average molecular weight of 156 thousand, melt knead the mixture and subsequently dry the melt-kneaded mixture at 110°C. This composition enables the polycarbodiimide compound to suppress reduction of the molecular weight caused by catalytic thermal degradation of the metal phosphate and thereby has the effects in improvement of the crystallization rate and improvement of the thermal stability (Patent Document 4, Examples). This composition, however, simultaneously melt kneads the polycarbodiimide having the effect of increasing the molecular weight, in addition to the high molecular-weight PLLA and PDLA having the weight-average molecular weight of not less than 150 thousand. This increases the melt viscosity during kneading and causes the thermal degradation reaction to proceed by shear heat generation, accompanied with production of a linear oligomer as a by-product. Accordingly, a resulting polylactic acid stereocomplex has a higher thermal stability than that of a composition without addition of the polycarbodiimide compound but is still insufficient. Increasing the melt kneading temperature reduces the melt viscosity, but the temperature increase accelerates thermal degradation to produce the linear oligomer as the by-product. This results in limitation in improvement of the thermal stability.

Prior Art Documents

Patent Documents:

Patent Document 1: JP 2009-179773A
Patent Document 2: JP 2003-192884A
Patent Document 3: JP 2008-258162A
Patent Document 4: JP Republication 2008-102919A

Summary of the Invention

Problems to be Solved by the Invention

The object of the invention is to provide a polylactic acid resin composition having excellent thermal stability, excellent molding processability, excellent heat resistance, excellent impact resistance and good appearance of molded product by adding a specified amount of a specific organic nucleating agent to control the amount of a linear oligomer to be not greater than 0.3% by weight included in the polylactic acid resin composition. The object of the invention is also to provide a production method of the polylactic acid resin composition, which provides a molded product having excellent molding processability, excellent heat resistance, excellent impact resistance and good appearance of the molded product and especially excellent thermal stability.

Means for Solving the Problems

The present invention is accordingly made to solve at least part of the problems described above and may be implemented by the following aspects.

[1] There is provided a polylactic acid resin composition, comprising an organic nucleating agent (B) in addition to a polylactic acid resin (A) comprised of a poly-L-lactic acid component and a poly-D-lactic acid component, wherein 0.15 to 0.90 parts by weight of the organic nucleating agent (B) is added relative to 100 parts by weight of the polylactic acid resin (A),

the polylactic acid resin composition satisfying following (i) to (v):

(i) amount of a linear oligomer of L-lactic acid and/or D-lactic acid included in 100 parts by weight of the polylactic acid resin composition is equal to or less than 0.3 parts by weight;

(ii) rate of weight-average molecular weight retention is equal to or greater than 70% after the polylactic acid resin composition is retained in a closed state at 220°C for 30 minutes;

(iii) degree of stereocomplexation (Sc) of the polylactic acid resin composition meets an Equation (1) given below:

$$Sc = \Delta Hmsc / (\Delta Hmh + \Delta Hmsc) \times 100 > 80 \qquad (1)$$

(wherein $\Delta Hmsc$ represents a stereocomplex crystal melting heat quantity (J/g) and $\Delta Hmh$ represents a sum of a crystal melting heat quantity (J/g) of a poly-L-lactic acid single crystal and a crystal melting heat quantity (J/g) of a poly-D-lactic acid single crystal);

(vi) the stereocomplex crystal melting heat quantity $\Delta Hmsc$ is equal to or greater than 30 J/g; and

(v) cooling crystallization heat quantity ($\Delta Hc$) is equal to or greater than 20 J/g in DSC measurement that increases temperature of the polylactic acid resin composition to 240°C, keeps at a constant temperature of 240 °C for 3 minutes and decreases temperature at a cooling rate of 20°C/ minute.

[2] There is provided the polylactic acid resin composition described in [1] above, wherein the amount of the linear oligomer of L-lactic acid and/or D-lactic acid is equal to or less than 0.2 parts by weight included in 100 parts by weight of the polylactic acid resin composition.

[3] There is provided the polylactic acid resin composition described in either one of [1] and [2] above, wherein the rate of weight-average molecular weight retention is equal to or greater than 80% after the polylactic acid resin composition is retained in the closed state at 220°C for 30 minutes.

[4] There is provided the polylactic acid resin composition described in any one of [1] to [3] above, wherein the polylactic acid resin (A) has a ratio of a weight of the poly-L-lactic acid component to a total weight of the poly-L-lactic acid component and the poly-D-lactic acid component, which is either in a range of 60 to 80% by weight or in a range of 20 to 40% by weight.

[5] There is provided the polylactic acid resin composition described in any one of [1] to [4] above, wherein the polylactic acid resin (A) is a polylactic acid block copolymer.

[6] There is provided the polylactic acid resin composition described in any one of [1] to [5] above, wherein weight-average molecular weight of either one of the poly-L-lactic acid component and the poly-D-lactic acid component is 60 thousand to 300 thousand, and weight-average molecular weight of the other is 10 thousand to 50 thousand.

[7] There is provided the polylactic acid resin composition described in any one of [1] to [6] above, wherein the organic nucleating agent (B) is a metal phosphate.

[8] There is provided the polylactic acid resin composition described in any one of [1] to [7] above, wherein 0.20 o 0.45 parts by weight of the organic nucleating agent (B) is added relative to 100 parts by weight of the polylactic acid resin (A).

[9] There is provided the polylactic acid resin composition described in any one of [1] to [8] above, the polylactic acid resin composition further comprising a molecular chain linking agent (C), wherein 0.01 to 10 parts by weight of the molecular chain linking agent (C) is added relative to 100 parts by weight of the polylactic acid resin (A).

[10] There is provided the polylactic acid resin composition described in any one of [1] to [9] above, the polylactic acid resin composition further comprising an inorganic nucleating agent (D), wherein 0.01 to 20 parts by weight of the inorganic nucleating agent (D) is added relative to 100 parts by weight of the polylactic acid resin (A).

[11] There is provided the polylactic acid resin composition described in any one of [1] to [10] above, wherein stereocomplex crystal melting point (Tmsc) of the polylactic acid resin composition is 205 to 215°C.

[12] There is provided the polylactic acid resin composition described in any one of [1] to [11] above, wherein weight-average molecular weight of the polylactic acid resin composition is 100 thousand to 300 thousand.

[13] There is provided the polylactic acid resin composition described in any one of [1] to [12] above, wherein melting temperature is 220°C, and melt viscosity under condition of a shear rate of 243 sec$^{-1}$ is equal to or less than 1000 Pa.s.

[14] There is provided a production method of the polylactic acid resin composition described in any one of [1] to [13] above, the production method comprising: a first step of melt kneading 0.15 to 0.90 parts by weight of an organic nucleating agent (B) with 100 parts by weight of a polylactic acid resin comprised of a poly-L-lactic acid component and a poly-D-lactic acid component; a second step of crystallizing a mixture obtained by the first step at 70 to 90°C under vacuum or under nitrogen flow; and a third step of devolatilizing the mixture at 130 to 150°C under vacuum or under nitrogen flow, after the second step.

[15] There is provided a production method of the polylactic acid resin composition described in any one of [1] to [13] above, the production method comprising: a first step of melt kneading a poly-L-lactic acid component and a poly-D-lactic acid component with an organic nucleating agent (B), such that a mixing ratio of the organic nucleating agent (B) is 0.15 to 0.90 parts by weight relative to 100 parts by weight of a polylactic acid resin (A) obtained from the poly-L-lactic acid component and the poly-D-lactic acid component; a second step of crystallizing a mixture obtained by the first step at 70 to 90°C under vacuum or under nitrogen flow; and a third step of devolatilizing the mixture at 130 to 150°C under vacuum or under nitrogen flow, after the second step.

[16] There is provided a molded product made of the polylactic acid resin composition described in any one of [1] to [13] above.

Advantageous Effects of the Invention

The present invention provides a polylactic acid resin composition having the excellent thermal stability, the excellent heat resistance, the excellent mechanical properties and the better appearance of a molded product.

Mode for Carrying Out the Invention

The following describes embodiments of the invention in detail. The embodiments of the invention are related to a polylactic acid resin composition, a production method thereof and a molded product made of the polylactic acid resin composition.

<Poly-L-Lactic Acid Component and Poly-D-Lactic Acid Component>

In the embodiments of the invention, the polylactic acid resin means a polylactic acid resin comprised of a poly-L-lactic acid component and a poly-D-lactic acid component.

The poly-L-lactic acid component herein is a polymer made of L-lactic acid as the main component and contains preferably not less than 70 mol%, more preferably not less than 90 mol%, furthermore preferably not less than 95 mol% and especially preferably not less than 98 mol% of an L-lactic acid unit.

The poly-D-lactic acid component herein is a polymer made of D-lactic acid as the main component and contains preferably not less than 70 mol%, more preferably not less than 90 mol%, furthermore preferably not less than 95 mol% and especially preferably not less than 98 mol% of a D-lactic acid unit.

According to an embodiment of the invention, the poly-L-lactic acid component containing the L-lactic acid unit or the poly-D-lactic acid component containing the D-lactic acid unit may include a different component unit in such a range that does not degrade the performance of the resulting polylactic acid resin composition. The different component unit other than the L-lactic acid unit or the D-lactic acid unit may be a polycarboxylic acid, a polyhydric alcohol, a hydroxycarboxylic acid or a lactone. Specific examples include: polycarboxylic acids and their derivatives such as succinic acid, adipic acid, sebacic acid, fumaric acid, terephthalic acid, isophthalic acid, 2,6-naphthalenedicarboxylic acid, sodium 5-sulfoisophthalate and 5-tetrabutylphosphoniumsulfoisophthalic acid; polyalcohols and their derivatives such as ethylene glycol, propylene glycol, butanediol, pentanediol, hexanediol, octanediol, neopentyl glycol, glycerol, trimethylolpropane, pentaerythritol, polyhydric alcohols produced by adding ethylene oxide or propylene oxide to trimethylolpropane or pentaerythritol, aromatic polyhydric alcohols produced addition reaction of ethylene oxide to bisphenols, diethylene glycol, triethylene glycol, polyethylene glycol and polypropylene glycol; hydroxycarboxylic acids such as glycolic acid, 3-hydroxybutyric acid, 4-hydroxybutyric acid, 4-hydroxyvaleic acid and 6-hydroxycaproic acid; and lactones such as glycolide, ε-caprolactone glycolide, ε-caprolactone, β-propiolactone, 8-butyrolactone, β- or γ-butyrolactone, pivalolactone and 8-valerolactone.

The molecular weights of the poly-L-lactic acid component and the poly-D-lactic acid component used according to the embodiment of the invention are not specifically limited, but preferably either one of the poly-L-lactic acid and the poly-D-lactic acid has the weight-average molecular weight of 60 thousand to not greater than 300 thousand and the other has the weight-average molecular weight of 10 thousand to not greater than 50 thousand. More preferably, one has the weight-average molecular weight of 100 thousand to 270 thousand, and the other has the weight-average molecular weight of 20 thousand to 45 thousand. Furthermore preferably, one has the weight-average molecular weight of 150 thousand to 240 thousand, and the other has the weight-average molecular weight of 30 thousand to 45 thousand. The weight-average molecular weight of either one of the poly-L-lactic acid and the poly-D-lactic acid may, however, be less than 60 thousand or greater than 300 thousand, and the weight-average molecular weight of the other may be less than 10 thousand or greater than 50 thousand.

The weight-average molecular weight herein is a poly(methyl methacrylate) standard equivalent obtained by gel permeation chromatography (GPC) measurement using hexafluoroisopropanol as the solvent.

Both the ring-opening polymerization method and the direct polymerization method may be employed as the production method of the poly-L-lactic acid component and the poly-D-lactic acid component used according to the embodiment of the invention. Production by the direct polymerization method is, however, preferable, in terms of the easiness of the production process and the raw material cost. The poly-L-lactic acid component and the poly-D-lactic acid component may be produced by the same production method. Alternatively one may be produced by the direct polymerization method, while the other may be produced by the ring-opening polymerization method.

The procedure of obtaining the poly-L-lactic acid component and the poly-D-lactic acid component by the ring-opening polymerization method or the direct polymerization method may be, for example, ring-opening polymerization or direct polymerization of either one of L-lactic acid and D-lactic acid in the presence of a catalyst.

When the poly-L-lactic acid component and the poly-D-lactic acid component are obtained by the ring-opening polymerization method or the direct polymerization method, with the objective of improving the crystallinity and the melting point of the resulting polylactic acid resin composition, the optical purities of L-lactic acid and D-lactic acid used are preferably not less than 90%ee, more preferably not less than 95%ee and furthermore preferably not less than 98%ee.

When the poly-L-lactic acid component and the poly-D-lactic acid component are obtained by the direct polymerization method, with the objective of obtaining a high molecular weight polymer, the water content in the reaction system is preferably not greater than 4 mol% relative to the amount of L-lactic acid or the amount of D-lactic acid in the reaction system, more preferably not greater than 2 mol% and furthermore preferably not greater than 0.5 mol%. The water content is a measured value by coulometric titration according to the Karl Fischer method.

A polymerization catalyst used for production of the poly-L-lactic acid component and the poly-D-lactic acid component by the direct polymerization method may be a metal catalyst or an acid catalyst. Examples of the metal catalyst include tin compounds, titanium compounds, lead compounds, zinc compounds, cobalt compounds, iron compounds, lithium compounds and rare earth metal compounds. As the above respective compounds, preferable are metal alkoxides, metal halide compounds, organic carboxylates, carbonates, sulfates and oxides.

According to the embodiment of the invention, in the case of production of the poly-L-lactic acid component or the poly-D-lactic acid component by the direct polymerization method, in view of the molecular weight of the resulting polylactic acid resin, tin compounds, titanium compounds, antimony compounds, rare earth metal compounds and acid catalysts are preferably used as the polymerization catalyst. In view of the melting point of the resulting polylactic acid resin composition, tin compounds, titanium compounds and sulfonic acid compounds are preferably used as the polymerization catalyst. Additionally, in view of the thermal stability of the resulting polylactic acid resin composition, when a metal catalyst is used as the polymerization catalyst, tin organic carboxylates and tin halide compounds are preferable, and specifically tin(II) acetate, tin(II) octylate and tin(II) chloride are more preferable. When an acid catalyst is used as the polymerization catalyst, monosulfonic acid compounds and disulfonic acid compounds are preferable, and specifically methanesulfonic acid, ethanesulfonic acid, propanesulfonic acid, propanedisulfonic acid, naphthalenedisulfonic acid and 2-aminoethanesulfonic acid are more preferable. The polymerization catalyst may be a single catalyst or may be two or more different catalysts used in combination. With the objective of enhancing the polymerization activity, however, it is preferable to use two or more different catalysts in combination. In terms of enabling suppression of coloring, it is preferable to use one or more selected from the tin compounds and one or more selected from the sulfonic acid compounds in combination. Additionally, in terms of the better productivity, more preferable is combined use of tin(II) acetate and/or tin(II) octylate and one or more selected from methanesulfonic acid, ethanesulfonic acid, propanedisulfonic acid, naphthalenedisulfonic acid, and 2-aminoethanesulfonic acid. Furthermore preferable is combined use of tin(II) acetate and/or tin(II) octylate and one of methanesulfonic acid, ethanesulfonic acid, propanedisulfonic acid and 2-aminoethanesulfonic acid.

In the case of employing the direct polymerization method, the amount of the polymerization catalyst added is not specifically limited but is preferably not less than 0.001 parts by weight relative to 100 parts by weight of the used raw material (e.g., L-lactic acid or D-lactic acid). The amount of the catalyst added is also preferably not greater than 2 parts by weight relative to 100 parts by weight of the used raw material (e.g., L-lactic acid or D-lactic acid) and is more preferably not greater than 1 part by weight. Controlling the amount of the catalyst to be not less than 0.001 parts by weight enhances the effect of reducing the polymerization time. Controlling the amount of the catalyst to be not greater than 2 parts by weight, on the other hand, facilitates a sufficient increase in molecular weight of the resulting poly-L-lactic acid component or the resulting poly-D-lactic acid component. When two or more different catalysts are used in combination, it is preferable that the total amount of the catalysts added is within the above range. Specifically, when one or more selected among the tin compounds and one or more selected among the sulfonic acid compounds are used in combination, in terms of maintaining the high polymerization activity and enabling suppression of coloring, the weight ratio of the tin compound to the sulfonic acid compound is preferably 1:1 to 1:30. In terms of the better productivity, the weight ratio is more preferably 1:2 to 1:15.

In the case of employing the direct polymerization method, the timing when the polymerization catalyst is added is not specifically limited. When an acid catalyst is used as the polymerization catalyst, however, in terms of the better productivity, it is preferable to add the polymerization catalyst prior to dehydration of the raw material. When a metal catalyst is used as the polymerization catalyst, in terms of enhancing the polymerization activity, it is preferable to add the polymerization catalyst after dehydration of the raw material.

With the objective of increasing the molecular weight, solid-phase polymerization may additionally be performed after the direct polymerization. When solid-phase polymerization is performed, the form of the poly-L-lactic acid and the poly-D-lactic acid subjected to the solid-phase polymerization is not specifically limited but may be any form such as block, film, pellet or powder. In terms of the efficient progress of solid-phase polymerization, however, the pellet form or the powder form is preferable. The method of making the pellet form may be, for example, a method that extrudes the poly-L-lactic acid or the poly-D-lactic acid after direct polymerization into strands and pelletizes the extruded strands or a method that extrudes the poly-L-lactic acid or the poly-D-lactic acid after direct polymerization into water and pelletizes the extruded poly-L-lactic acid or poly-D-lactic acid with an underwater cutter. The method of making the powder form may be, for example, a method that pulverizes the poly-L-lactic acid or the poly-D-lactic acid after direct polymerization with a pulverizer, such as a mixer, a blender, a ball mill or a hammer mill. The method of performing this solid-phase polymerization process is not specifically limited but may be batch method or continuous method. A reaction vessel used may be a stirring tank reactor, a mixer reactor or a column reactor. Two or more of these reaction vessels may be used in combination.

When this solid-phase polymerization process is performed, it is preferable that the poly-L-lactic acid or the poly-D-lactic acid after the direct polymerization is crystallized. According to the embodiment of the invention, when the poly-L-lactic acid or the poly-D-lactic acid after the direct polymerization is in the crystal form, crystallization of the poly-L-lactic acid or the poly-D-lactic acid is not indispensable prior to the solid-phase polymerization process. Crystallization of the poly-L-lactic acid or the poly-D-lactic acid prior to the solid-phase polymerization process, however, further enhances the efficiency of the solid-phase polymerization.

The method of crystallization is not specifically limited, but any known method may be employed: for example, a method that maintains the poly-L-lactic acid or the poly-D-lactic acid in a gas phase or in a liquid phase at a crystallization temperature or a method that cools down and solidifies the melt of the poly-L-lactic acid or the poly-D-lactic acid while stretching or shearing the melt. In terms of the simple operation, preferably employed is the method that maintains the poly-L-lactic acid or the poly-D-lactic acid in the gas phase or in the liquid phase at the crystallization temperature.

The crystallization temperature herein is not specifically limited but may be any temperature in a temperature range of higher than the glass transition temperature and lower than the melting point of the poly-L-lactic acid or the poly-D-lactic acid. It is, however, more preferable that the above crystallization temperature is in the range of 70 to 90°C.

Crystallization of the poly-L-lactic acid or the poly-D-lactic acid is preferably performed under vacuum or under inert gas flow such as dry nitrogen.

The time for crystallization of the poly-L-lactic acid or the poly-D-lactic acid is not specifically limited. For sufficient crystallization, however, the time is preferably not less than 3 hours and more preferably not less than 5 hours.

The temperature condition when the solid-phase polymerization process is performed after direct polymerization may be a temperature that is equal to or lower than the melting point of the poly-L-lactic acid or the poly-D-lactic acid. More specifically, the temperature condition is preferably not lower than 100°C, is more preferably not lower than 110°C and is most preferably not lower than 120°C in terms of the efficient progress of solid-phase polymerization. The temperature condition is also preferably not higher than 170°C, is more preferably not higher than 165°C and is most preferably not higher than 160°C in terms of the efficient progress of solid-phase polymerization.

In order to reduce the reaction time of solid-phase polymerization, it is preferable to increase the temperature stepwise or to increase the temperature continuously with the progress of the reaction. The temperature condition of the stepwise temperature increase during solid-phase polymerization is preferably to increase the temperature at 120 through 130°C for 1 to 15 hours in a first stage, at 135 through 145°C for 1 to 15 hours in a second stage and at 150 through 170°C for 10 to 30 hours in a third stage. The temperature condition is more preferably to increase the temperature at 120 through 130°C for 2 to 12 hours in the first stage, at 135 through 145°C for 2 to 12 hours in the second stage and at 150 through 170°C for 10 to 25 hours in the third stage. The temperature condition of the continuous temperature increase during solid-phase polymerization is preferably to continuously increase the temperature from an initial temperature of 130 through 150°C to 150 through 170°C at the rate of 1 through 5°C/ minute. Combining the stepwise temperature increase with the continuous temperature increase is preferable in terms of the efficient progress of solid-phase polymerization.

This solid-phase polymerization process is preferably performed under vacuum or under inert gas flow such as dry nitrogen. The degree of vacuum in solid-phase polymerization under vacuum is preferably not greater than 150 Pa, is more preferably not greater than 75 Pa and is especially preferably not greater than 20 Pa. The flow rate in solid-phase polymerization under inert gas flow is preferably not lower than 0.1 ml/ minute relative to 1 g of the mixture, is more preferably not lower than 0.5 ml/ minute and is especially preferably not lower than 1.0 ml/ minute. The flow rate is also preferably not higher than 2000 ml/ minute, is more preferably not higher than 1000 ml/ minute and is especially preferably not higher than 500 ml/ minute.

The polymerization catalyst used for production of the poly-L-lactic acid component or the poly-D-lactic acid component by the ring-opening polymerization method may be a metal catalyst or an acid catalyst, as in the case of the direct polymerization method.

According to the embodiment of the invention, in the case of production of the poly-L-lactic acid component or the poly-D-lactic acid component by the ring-opening polymerization method, in view of the molecular weight of the resulting polylactic acid resin, a metal catalyst is preferably used as the polymerization catalyst; especially tin compounds, titanium compounds, antimony compounds and rare earth metal compounds are more preferable. In view of the melting point of the resulting polylactic acid resin composition, tin compounds and titanium compounds are more preferable. In view of the thermal stability of the resulting polylactic acid resin composition, tin organic carboxylates and tin halide compounds are preferable as the polymerization catalyst, and specifically tin(II) acetate, tin(II) octylate and tin(II) chloride are more preferable.

In the case of employing the ring-opening polymerization method, the amount of the polymerization catalyst added is not specifically limited but is preferably not less than 0.001 parts by weight relative to 100 parts by weight of the used raw material (e.g., L-lactide or D-lactide) and is more preferably not less than 0.001 parts by weight. The amount of the catalyst added is also preferably not greater than 2 parts by weight relative to 100 parts by weight of the used raw material (e.g., L-lactide or D-lactide) and is more preferably not greater than 1 part by weight. Controlling the amount of the catalyst to be not less than 0.001 parts by weight enhances the effect of reducing the polymerization time. Controlling the amount of the catalyst to be not greater than 2 parts by weight, on the other hand, facilitates a sufficient increase in molecular weight of the resulting poly-L-lactic acid component or the resulting poly-D-lactic acid component. When two or more different catalysts are used in combination, it is preferable that the total amount of the catalysts added is within the above range.

In the case of employing the ring-opening polymerization method, the timing when the polymerization catalyst is added is not specifically limited. Adding the catalyst after dissolving lactide under heating is preferable to homogeneously disperse the catalyst in the system and enhance the polymerization activity.

<(A) Polylactic Acid Resin>

The polylactic acid resin according to the embodiment of the invention consists of the poly-L-lactic acid component and the poly-D-lactic acid component. The polylactic acid resin may be produced by melt kneading poly-L-lactic acid and poly-D-lactic acid in the course of production of the polylactic acid resin composition or may be pre-produced prior to production of the polylactic acid resin composition.

The weight-average molecular weight (Mw) of the polylactic acid resin according to the embodiment of the invention is not specifically limited, but is preferably not less than 100 thousand in terms of the mechanical properties, is more preferably not less than 120 thousand and is especially preferably not less than 140 thousand in terms of the molding processability and the mechanical properties. The above weight-average molecular weight (Mw) is also preferably not greater than 300 thousand in terms of the mechanical properties, is more preferably not greater than 280 thousand and is especially preferably not greater than 250 thousand in terms of the molding processability and the mechanical properties. The polydispersity as the ratio of the weight-average molecular weight (Mw) to the number-average molecular weight (Mn) of the polylactic acid resin is preferably not less than 1.5 in terms of the mechanical properties, is more preferably not less than 1.8 and is especially preferably not less than 2.0 in terms of the molding processability and the mechanical properties. The above polydispersity is also preferably not greater than 3.0 in terms of the mechanical properties, is more preferably not greater than 2.7 and is especially preferably not greater than 2.4 in terms of the molding processability and the mechanical properties. The weight-average molecular weight and the polydispersity herein are poly(methyl methacrylate) standard equivalents obtained by gel permeation chromatography (GPC) measurement using hexafluoroisopropanol as the solvent.

According to the embodiment of the invention, the ratio of the weight of the poly-L-lactic acid component to the total weight of the poly-L-lactic acid component and the poly-D-lactic acid component constituting the polylactic acid resin is preferably 20 to 80% by weight. Especially, in terms of the easiness of stereocomplexation, it is preferable to unbalance the ratio of the weight of the poly-L-lactic acid component to the above total weight. More specifically, it is preferable that the poly-L-lactic acid component and the poly-D-lactic acid component have different weights and that there is a greater difference between the two weights. For this purpose, the ratio of the weight of the poly-L-lactic acid component to the above total weight is more preferably 60 to 80% by weight or 20 to 40% by weight and is most preferably 65 to 75% by weight or 25 to 35% by weight. When the ratio of the weight of the poly-L-lactic acid component to the total weight of the poly-L-lactic acid component and the poly-D-lactic acid component constituting the polylactic acid resin is other than 50% by weight, it is preferable to increase the mixing amount of the poly-L-lactic acid component or the poly-D-lactic acid component having the greater weight-average molecular weight.

The polylactic acid resin according to the embodiment of the invention is preferably a polylactic acid block copolymer of a segment made of the poly-L-lactic acid component and a segment made of the poly-D-lactic acid component, in terms of the high degree of stereocomplexation and the excellent heat resistance and the excellent impact strength. The polylactic acid resin according to the embodiment of the invention may, however, be produced by melt mixing the poly-L-lactic acid component and the poly-D-lactic acid component under heating without any special polymerization process to form the block copolymer.

<Production Method of (A) Polylactic Acid Resin>

In the case of pre-production of the polylactic acid resin according to the embodiment of the invention, after the step of melt kneading the poly-L-lactic acid component and the poly-D-lactic acid component, the procedure preferably performs the step of crystallization at 70 to 90°C under vacuum or under nitrogen flow and subsequently performs the step of devolatilization at 130 to 150°C under vacuum or under nitrogen flow. When the polylactic acid resin is the polylactic acid block copolymer of the segment made of the poly-L-lactic acid component and the segment made of the poly-D-lactic acid component, after the above melt kneading step, the procedure performs the step of crystallization at 70 to 90°C under vacuum or under nitrogen flow, subsequently performs the step of devolatilization at 130 to 150°C under vacuum or under nitrogen flow and then performs the step of solid-phase polymerization at a temperature of higher than 150°C and not higher than 175°C.

The method of melt kneading the poly-L-lactic acid component and the poly-D-lactic acid component is not specifically limited. Available methods include: for example, a method of melt kneading the poly-L-lactic acid component and the poly-D-lactic acid component at a temperature of not lower than a melting end temperature of the component having the higher melting point; a method of retaining at least one of the poly-L-lactic acid component and the poly-D-lactic acid component in the molten state in a melting machine in a temperature range of [(melting point) - 50°C] to [(melting point) + 20°C] with application of shear and subsequently mixing the poly-L-lactic acid component and the poly-D-lactic acid component such that crystals of the mixture remain.

The melting point of the poly-L-lactic acid component or the poly-D-lactic acid component herein indicates a peak top temperature at a single crystal melting peak of the poly-L-lactic acid component or the poly-D-lactic acid component measured by differential scanning calorimetry (DSC). The melting end temperature of the poly-L-lactic acid component or the poly-D-lactic acid component herein indicates a peak end temperature at the single crystal melting peak of the poly-L-lactic acid component or the poly-D-lactic acid component measured by differential scanning calorimetry (DSC).

The procedure of melt kneading at the temperature of not lower than the melting end temperature may employ either the batch method or the continuous method to mix the poly-L-lactic acid component and the poly-D-lactic acid component. Available examples of a kneading machine include a single screw extruder, a twin screw extruder, a plastomill, a kneader and a stirring tank reactor equipped with a decompression device. In terms of homogeneous and sufficient kneading, it is preferable to use either the single screw extruder or the twin screw extruder.

The temperature condition of melt kneading at the temperature of not lower than the melting end temperature is preferably a temperature that is not lower than the melting end temperature of the component having the higher melting point between the poly-L-lactic acid component and the poly-D-lactic acid component. The temperature condition is preferably not lower than 140°C, is more preferably not lower than 160°C and is especially preferably not lower than 180°C. The temperature condition is also preferably not higher than 250°C, is more preferably not higher than 230°C and is especially preferably not higher than 220°C. Controlling the temperature for melt kneading to be not higher than 250°C suppresses reduction in molecular weight of the mixture. Controlling the temperature for melt kneading to be not lower than 140°C suppresses reduction in flowability of the mixture.

The time condition of melt kneading is preferably not shorter than 0.1 minutes, is more preferably not shorter than 0.3 minutes and is especially preferably not shorter than 0.5 minutes. The above time condition is also preferably not longer than 10 minutes, is more preferably not longer than 5 minutes and is especially preferably not longer than 3 minutes. Controlling the time for melt kneading to be not shorter than 0.1 minutes enhances the homogeneity of mixing poly-L-lactic acid and poly-D-lactic acid. Controlling the time for melt kneading to be not longer than 10 minutes suppresses thermal degradation by mixing.

The pressure condition of melt kneading is not specifically limited but may be under air atmosphere or under inert gas atmosphere such as nitrogen.

In kneading with an extruder, the method of feeding the poly-L-lactic acid and the poly-D-lactic acid is not specifically limited. Available methods include: for example, a method of feeding the poly-L-lactic acid component and the poly-D-lactic acid component together from a resin hopper; and a method of using a side resin hopper as necessary and separately feeding the poly-L-lactic acid component and the poly-D-lactic acid component from the resin hopper and the side resin hopper. The poly-L-lactic acid component and the poly-D-lactic acid component may be fed directly in the molten state from the production step of the poly-L-lactic acid component and the poly-D-lactic acid component to the kneading machine.

As the screw element in the extruder, it is preferable to provide a mixing unit with a kneading element in order to homogeneously mix the poly-L-lactic acid component and the poly-D-lactic acid component and enable stereocomplexation.

The form of the poly-L-lactic acid component and the poly-D-lactic acid component after melt kneading is not specifically limited but may be any form such as block, film, pellet or powder. In terms of the efficient progress of the respective steps, however, the pellet form or the powder form is preferable. The method of making the pellet form may be, for example, a method that extrudes the mixture of the poly-L-lactic acid component and the poly-D-lactic acid component into strands and pelletizes the extruded strands or a method that extrudes the above mixture into water and pelletizes the extruded mixture with an underwater cutter. The method of making the powder form may be, for example, a method that pulverizes the above mixture with a pulverizer, such as a mixer, a blender, a ball mill or a hammer mill.

The temperature in the crystallization step after melt kneading of the poly-L-lactic acid component and the poly-D-lactic acid component is preferably 70 to 90°C. Controlling the crystallization temperature to be not lower than 70°C enables the sufficient progress of crystallization and suppresses fusion between the pellets or between the powders in a subsequent devolatilization step. Controlling the crystallization temperature to be not hither than 90°C, on the other hand, suppresses fusion between the pellets or between the powders and suppresses reduction in molecular weight by thermal degradation and production of by-products.

The time of the crystallization step is preferably not shorter than 3 hours and is more preferably not shorter than 5 hours in terms of suppressing fusion between the pellets or between the powders in a subsequent devolatilization step. Controlling the crystallization time to be not shorter than 3 hours enables the sufficient progress of crystallization and suppresses fusion between the pellets or between the powders in a subsequent devolatilization step.

This crystallization step is preferably performed under vacuum or under inert gas flow such as dry nitrogen. The degree of vacuum in crystallization under vacuum is preferably not greater than 150 Pa, is more preferably not greater than 75 Pa and is especially preferably not greater than 20 Pa. The flow rate in crystallization under inert gas flow is preferably not lower than 0.1 ml/ minute relative to 1 g of the mixture, is more preferably not lower than 0.5 ml/ minute and is especially preferably not lower than 1.0 ml/ minute. The above flow rate is also preferably not higher than 2000 ml/ minute relative to 1 g of the mixture, is more preferably not higher than 1000 ml/ minute and is especially preferably not higher than 500 ml/ minute.

The temperature of the devolatilization step after the crystallization step is preferably not lower than 130°C, is more preferably not lower than 135°C and is furthermore preferably not lower than 140°C in terms of reduction in acid value by removal of by-products. The above temperature of the devolatilization step is also preferably not higher than 150°C in terms of reduction in acid value by removal of by-products.

The time of the devolatilization step is preferably not shorter than 3 hours, is more preferably not shorter than 4 hours and is furthermore preferably not shorter than 5 hours in terms of reduction in acid value by removal of by-products.

This devolatilization step is preferably performed under vacuum or under inert gas flow such as dry nitrogen. The degree of vacuum in devolatilization under vacuum is preferably not greater than 150 Pa, is more preferably not greater than 75 Pa and is especially preferably not greater than 20 Pa. The flow rate in devolatilization under inert gas flow is preferably not lower than 0.1 ml/ minute relative to 1 g of the mixture, is more preferably not lower than 0.5 ml/ minute and is especially preferably not lower than 1.0 ml/ minute. The above flow rate is also preferably not higher than 2000 ml/ minute relative to 1 g of the mixture, is more preferably not higher than 1000 ml/ minute and is especially preferably not higher than 500 ml/ minute.

The production method of the polylactic acid resin according to the embodiment of the invention may additionally perform the solid-phase polymerization step after the devolatilization step to produce the polylactic acid block copolymer of the segment made of the poly-L-lactic acid component and the segment made of the poly-D-lactic acid component. The temperature condition of the solid-phase polymerization step is preferably higher than 150°C and not higher than 175°C. In terms of the efficient progress of solid-phase polymerization, the temperature condition is more preferably higher than 150°C and not higher than 170°C, and is most preferably higher than 150°C and not higher than 165°C.

In the solid-phase polymerization step, in order to reduce the reaction time of solid-phase polymerization, it is preferable to increase the temperature stepwise or to increase the temperature continuously with the progress of the reaction. The temperature condition of the stepwise temperature increase during solid-phase polymerization is preferably to increase the temperature at the temperature of higher than 150°C and not higher than 155°C for 1 to 15 hours in a first stage and at 160 through 175°C for 1 to 15 hours in a second stage. The temperature condition is more preferably to increase the temperature at the temperature of higher than 150°C and not higher than 155°C for 2 to 12 hours in the first stage and at 160 through 175°C for 2 to 12 hours in the second stage. The temperature condition of the continuous temperature increase during solid-phase polymerization is preferably to continuously increase the temperature from an initial temperature of higher than 150°C and not higher than 155°C to 160 through 175°C at the rate of 1 through 5°C/ minute. Combining the stepwise temperature increase with the continuous temperature increase is preferable in terms of the efficient progress of solid-phase polymerization.

This solid-phase polymerization process is preferably performed under vacuum or under inert gas flow such as dry nitrogen. The degree of vacuum in solid-phase polymerization under vacuum is preferably not greater than 150 Pa, is more preferably not greater than 75 Pa and is especially preferably not greater than 20 Pa. The flow rate in solid-phase polymerization under inert gas flow is preferably not lower than 0.1 ml/ minute relative to 1 g of the mixture, is more preferably not lower than 0.5 ml/ minute and is especially preferably not lower than 1.0 ml/ minute. The above flow rate is also preferably not higher than 2000 ml/ minute relative to 1 g of the mixture, is more preferably not higher than 1000 ml/ minute and is especially preferably not higher than 500 ml/ minute.

<Polylactic Acid Resin Composition>

The polylactic acid resin composition according to the embodiment of the invention includes 0.15 to 0.9 parts by weight of an organic nucleating agent (B), in addition to 100 parts by weight of the polylactic acid resin comprised of the poly-L-lactic acid component and the poly-D-lactic acid component.

The polylactic acid resin composition according to the embodiment of the invention includes the above specific mixing amount of the organic nucleating agent (B) and thereby controls the amount of a linear oligomer of L-lactic acid and/or D-lactic acid to be not greater than 0.3 parts by weight included in 100 parts by weight of the polylactic acid resin composition. Controlling the amount of linear oligomer to be not greater than 0.3 parts by weight suppresses reduction of the molecular weight in the melt retention state and provides the polylactic acid resin composition having the excellent thermal stability and the good appearance of a resulting molded product. The amount of linear oligomer is more preferably not greater than 0.25 parts by weight in terms of the appearance of the molded product, and is furthermore preferably not greater than 0.2 parts by weight in terms of the thermal stability in the melt retention state and the mechanical properties of the molded product. The polylactic acid resin composition according to the embodiment of the invention generally contains the linear oligomer of not less than 0.01 parts by weight in 100 parts by weight of the polylactic acid resin composition.

The linear oligomer herein indicates a linear low molecular-weight oligomer of a dimer or a greater multimer dissolved in a solution after polymer removal, which is obtained by dissolution of the polylactic acid resin composition in a mixed solution of chloroform/ o-cresol= 1/2 weight ratio, re-precipitation of the resulting polymer solution with methanol, and subsequent filtration with a membrane filter having the pore size of 1 micron for removal of polymers. The content of the linear low molecular-weight oligomer (linear oligomer) of the dimer or the greater multimer according to the embodiment of the invention is a value measured by the method described in Macromolecules, Vol. 29, No. 10, 1996. More specifically, the content of the linear oligomer is quantitatively determined from an integral value of a peak observed in a chemical shift range of 1.26 to 1.55 ppm in a $^1$H-NMR spectrum measured in a deuterated chloroform solution at 15°C.

The amount of the linear oligomer included in the polylactic acid resin composition herein is a measured value of the amount of linear oligomer included in the polylactic acid resin composition obtained by mixing and melt kneading the organic nucleating agent (B) and necessary additives with the above polylactic acid resin (A).

In the polylactic acid resin composition used according to the embodiment of the invention, the rate of weight-average molecular weight retention as the index of the thermal stability, i.e., the rate of weight-average molecular weight retention after the polylactic acid resin composition is retained in a closed state at 220°C for 30 minutes, is preferably not less than 70%. The above rate of weight-average molecular weight retention is more preferably not less than 75% in terms of the appearance of the molded product and is furthermore preferably not less than 80% in terms of the mechanical properties of the molded product. The upper limit of the above rate of weight-average molecular weight retention is 100%.

In the polylactic acid resin composition used according to the embodiment of the invention, the degree of stereocomplexation (Sc) calculated by Equation (1) given below is preferably not less than 80%. The above degree of stereocomplexation (Sc) is more preferably not less than 90% in terms of the molding processability and is furthermore preferably not less than 95% in terms of the heat resistance of the molded product. The upper limit of the above degree of stereocomplexation (Sc) is 100%.

$$Sc = \Delta Hmsc/ (\Delta Hmh + \Delta Hmsc) \times 100 \qquad (1)$$

$\Delta Hmh$ represents the sum of the crystal melting heat quantity of a poly-L-lactic acid single crystal and the crystal melting heat quantity of a poly-D-lactic acid single crystal appearing at the temperature of not lower than 150°C and lower than 190°C. $\Delta Hmsc$ represents the crystal melting heat quantity of a stereocomplex crystal appearing at the temperature of not lower than 190°C and lower than 240°C. $\Delta Hmsc$ and $\Delta Hmh$ are values obtained in DSC measurement that increase the temperature of the polylactic acid resin composition to 240°C, keeps at the constant temperature of 240°C for 3 minutes to be in the molten state, decreases the temperature to 30°C at a cooling rate of 20°C/ minute and additionally increases the temperature to 240°C at a heating rate of 20°C/ minute.

In the polylactic acid resin composition used according to the embodiment of the invention, the stereocomplex crystal melting heat quantity ΔHmsc is preferably not less than 30 J/g, is more preferably not less than 35 J/g in terms of the molding processability and is furthermore preferably not less than 40 J/g in terms of the heat resistance of the molded product. The upper limit of the above ΔHmsc is theoretically 142 J/g but is practically 100 J/g.

In the polylactic acid resin composition used according to the embodiment of the invention, the stereocomplex melting point Tmsc is preferably 200 to 225°C. Controlling Tmsc to be not lower than 200°C enhances the heat resistance of the molded product made of the polylactic acid resin composition. Controlling Tmsc to be not higher than 225°C, on the other hand, allows for setting the lower molding process temperature and thereby suppresses deterioration of the appearance of the molded product due to thermal degradation. Tmsc is more preferably 205 to 220°C in terms of the heat resistance of the molded product and is furthermore preferably 205 to 215°C in terms of the molding processability. Tmsc herein indicates a peak top temperature of the above ΔHmsc peak.

In the polylactic acid resin composition used according to the embodiment of the invention, the cooling crystallization heat quantity (ΔHc) is preferably not less than 20 J/g in DSC measurement that increase the temperature of the polylactic acid resin composition to 240°C, keeps at the constant temperature of 240°C for 3 minutes to be in the molten state and decreases the temperature at a cooling rate of 20°C/ minute. The above ΔHc is preferably not less than 25 J/g in terms of the heat resistance of a molded product made of the polylactic acid resin composition and is furthermore preferably not less than 30 J/g in terms of the molding processability. Controlling ΔHc to be not less than 20 J/g increases the crystallization speed and shortens the molding time, thereby improving the molding processability. The upper limit of the above ΔHc is theoretically 142 J/g but is practically 100 J/g.

The weight-average molecular weight (Mw) of the polylactic acid resin composition used according to the embodiment of the invention is preferably not less than 100 thousand and is more preferably not less than 120 thousand in terms of the mechanical properties of a molded product, the molding processability and the appearance of the molded product. The weight-average molecular weight (Mw) of the polylactic acid resin composition is also preferably not greater than 300 thousand, is more preferably not greater than 250 thousand in terms of the mechanical properties of the molded product and is furthermore preferably not greater than 200 thousand in terms of the molding processability and the appearance of the molded product. The weight-average molecular weight (Mw) of the polylactic acid resin composition may, however, be less than 100 thousand or may exceed 300 thousand.

The polydispersity as the ratio of the weight-average molecular weight (Mw) to the number-average molecular weight (Mn) of the polylactic acid resin composition is preferably not less than 1.5 in terms of the mechanical properties, is more preferably not less than 1.8 and is especially preferably not less than 2.0 in terms of the molding processability and the mechanical properties. The above polydispersity is also preferably not greater than 3.0 in terms of the mechanical properties, is more preferably not greater than 2.7 and is especially preferably not greater than 2.4 in terms of the molding processability and the mechanical properties. The weight-average molecular weight and the polydispersity herein are poly(methyl methacrylate) standard equivalents obtained by gel permeation chromatography (GPC) measurement using hexafluoroisopropanol as the solvent.

The weight-average molecular weight and the number-average molecular weight of the polylactic acid resin composition herein are measured values of the weight-average molecular weight and the number-average molecular weight with respect to the polylactic acid resin composition obtained by mixing and melt kneading the organic nucleating agent (B) and necessary additive with the above polylactic acid resin (A).

The polylactic acid resin composition used according to the embodiment of the invention preferably has the melting temperature of 220°C and the melt viscosity of not greater than 1000 Pa·s under the condition of the shear rate of 243 sec$^{-1}$. The above melt viscosity is more preferably not greater than 800 Pa·s in terms of the thermal stability and is furthermore preferably not greater than 600 Pa·s in terms of the appearance of a molded product. The above melt viscosity is also preferably not less than 10 Pa.s, is more preferably not less than 50 Pa·s in terms of the molding processability and is furthermore preferably not less than 100 Pa·s in terms of the appearance of the molded product. The above melt viscosity may, however, exceed 1000 Pa·s or may be less than 10 Pa.s.

<(B) Organic Nucleating Agent>

The polylactic acid resin composition according to the embodiment of the invention is characterized by addition of one organic nucleating agent or two or more different organic nucleating agents. The type of the organic nucleating agent used may be any of commonly known organic nucleating agents for thermoplastic resins. Specific examples include: metal organic carboxylates such as sodium benzoate, barium benzoate, lithium terephthalate, sodium terephthalate, potassium terephthalate, sodium toluate, sodium salicylate, potassium salicylate, zinc salicylate, aluminum dibenzoate, potassium dibenzoate, lithium dibenzoate, sodium β-naphthalate and sodium cylohexanecarboxylate; organic sulfonates such as sodium p-toluenesulfonate and sodium sulfoisophthalate; sorbitol compounds; metal salts of phenylphosphonates; metal phosphates such as sodium-2,2'-methylenebis(4,6-di-t-butylphenyl)phosphate (for example, trade name: Adekastab NA-11 manufactured by ADEKA Corporation) and aluminum bis(2,2'-methylenebis-4,6-di-t-butylphenylphosphate) hydroxide (for example, trade name: Adekastab NA-21, NA-71 (complex) manufactured by ADEKA Corporation); organic amide compounds such as N,N'-ethylenebisdodecanamide, ethylenebis-12-hydroxystearamide and trimesic tricyclohexylamide. Among them, metal phosphates are preferable, and sodium-2,2'-methylenebis(4,6-di-t-butylphenyl)phosphate and aluminum bis(2,2'-methylenebis-4,6-di-t-butylphenylphosphate) hydroxide are more preferable. Addition of such organic nucleating agents provides the polylactic acid resin composition and the molded product having the excellent mechanical properties and the excellent molding processability.

According to the embodiment of the invention, the amount of the organic nucleating agent added is 0.15 to 0.90 parts by weight relative to 100 parts by weight of the polylactic acid resin in terms of improvement in heat resistance of the polylactic acid resin composition. The amount of the organic nucleating agent added is preferably not less than 0.20 parts by weight in terms of the thermal stability, the appearance of the molded product and the mechanical properties. The amount of the organic nucleating agent added is more preferably not greater than 0.70 parts by weight in terms of the thermal stability, is furthermore preferably not greater than 0.50 parts by weight in terms of the appearance of the molded product and the mechanical properties and is especially preferably not greater than 0.45 parts by weight.

<(C) Molecular Chain Linking Agent>

The polylactic acid resin composition according to the embodiment of the invention may include one molecular chain linking agent or two or more different molecular chain linking agents.

The molecular chain linking agent used according to the embodiment of the invention is not specifically limited but may be any compound that is capable of reacting with a terminal carboxylic group of the polylactic acid resin. One of such compounds or two or more different compounds may be selected arbitrarily to be used.

Such a carboxylic group-reactive molecular chain linking agent according to the embodiment of the invention reacts not only with the polylactic acid resin but with carboxyl group of an oligomer produced by thermal degradation or hydrolysis. It is preferable to use at least one compound selected among epoxy compounds, oxazoline compounds, oxazine compounds and carbodiimide compounds as such a molecular chain linking agent.

Examples of the epoxy compound usable as the molecular chain linking agent according to the embodiment of the invention include glycidyl ether compounds, glycidyl ester compounds, glycidyl amine compounds, glycidyl imide compounds and alicyclic epoxy compounds. In terms of the excellent mechanical properties, excellent moldability, excellent heat resistance, excellent hydrolysis resistance or excellent long-term durability such as dry heat resistance, it is preferable to use two or more different compounds elected among glycidyl ether compounds and glycidyl ester compounds. It is more preferable to use at least one or more compounds selected among glycidyl ether compounds and/or at least one or more compounds selected among glycidyl ester compounds.

According to the embodiment of the invention, the glycidyl ether compounds are etherified glycidyl group-containing compounds. Specific examples include glycerol triglycidyl ether, trimethylolpropane triglycidyl ether and pentaerythritol polyglycidyl ether.

According to the embodiment of the invention, the glycidyl ester compounds are esterified glycidyl group-containing compounds. Specific examples include triglycidyl trimesate, triglycidyl trimellitate and tetraglycidyl pyromellitate.

According to the embodiment of the invention, specific examples of the glycidyl amine compound include tetraglycidyl aminodiphenylmethane, triglycidyl para-aminophenol, triglycidyl meta-aminophenol, tetraglycidyl meta-xylenediamine, tetraglycidyl bis-aminomethylcyclohexane, triglycidyl cyanurate and triglycidyl isocyanurate.

Examples of the other epoxy compound include: epoxy-modified fatty acid glycerides such as epoxidized soybean oil, epoxidized linseed oil and epoxidized whale oil; phenol novolac epoxy resins; cresol novolac epoxy resins and polymers including glycidyl group-containing vinyl monomer. In terms of the excellent molding processability, excellent melt viscosity stability, excellent impact resistance or excellent surface hardness, preferable are polymers including glycidyl group-containing vinyl monomer.

According to the embodiment of the invention, specific examples of the material monomer constituting the glycidyl group-containing vinyl monomer include: glycidyl esters of unsaturated monocarboxylic acids such as glycidyl (meth)acrylate and glycidyl p-styrylcarboxylate; monoglycidyl esters and polyglycidyl esters of unsaturated polycarboxylic acids such as maleic acid and itaconic acid; and unsaturated glycidyl esters such as allyl glycidyl ether, 2-methylallyl glycidyl ether and styrene-4-glycidyl ether. Among them, in terms of the radical polymerizability, glycidyl acrylate or glycidyl methacrylate is preferably used. Any of these monomers may be used alone or two or more of these monomers may be used.

According to the embodiment of the invention, the polymer including the glycidyl group-containing vinyl monomer preferably includes a vinyl monomer other than the glycidyl group-containing vinyl monomer as a copolymerizable component. The properties such as the melting point and the glass transition temperature of the polymer including the glycidyl group-containing vinyl monomer are adjustable according to selection of the vinyl monomer other than the glycidyl group-containing vinyl monomer. Examples of the vinyl monomer other than the glycidyl group-containing vinyl monomer include acrylic vinyl monomer, carboxylic acid vinyl ester monomer, aromatic vinyl monomer, unsaturated dicarboxylic anhydride monomer, unsaturated dicarboxylic acid monomer, aliphatic vinyl monomer, maleimide monomer and other vinyl monomers.

Specific examples of the material monomer constituting the acrylic vinyl monomer include material monomers constituting amino group-containing acrylic vinyl monomers such as acrylic acid, methacrylic acid, methyl acrylate, methyl methacrylate, ethyl acrylate, ethyl methacrylate, propyl acrylate, propyl methacrylate, n-butyl acrylate, n-butyl methacrylate, isobutyl acrylate, isobutyl methacrylate, t-butyl acrylate, t-butyl methacrylate, 2-ethylhexyl acrylate, 2-ethylhexyl methacrylate, cyclohexyl acrylate, cyclohexyl methacrylate, isobornyl acrylate, isobornyl methacrylate, lauryl acrylate, lauryl methacrylate, stearyl acrylate, stearyl methacrylate, hydroxyethyl acrylate, hydroxyethyl methacrylate, hydroxypropyl acrylate, hydroxypropyl methacrylate, polyethylene glycol acrylate and methacrylate, polypropylene glycol acrylate and methacrylate, trimethoxysilylpropyl acrylate, trimethoxysilylpropyl methacrylate, methyldimethoxysilylpropyl acrylate, methyldimethoxysilylpropyl methacrylate, acrylonitrile, methacrylonitrile, N,N-dialkyl acrylamide, N,N-dialkyl methacrylamide, $\alpha$-hydroxymethyl acrylate, dimethylaminoethyl acrylate and dimethylaminoethyl methacrylate. Among them, preferable are acrylic acid, methacrylic acid, methyl acrylate, methyl methacrylate, ethyl acrylate, ethyl methacrylate, propyl acrylate, propyl methacrylate, n-butyl acrylate, n-butyl methacrylate, isobutyl acrylate, isobutyl methacrylate, t-butyl acrylate, t-butyl methacrylate, 2-ethylhexyl acrylate, 2-ethylhexyl methacrylate, cyclohexyl acrylate, cyclohexyl methacrylate, isobornyl acrylate, isobornyl methacrylate, acrylonitrile and methacrylonitrile. More preferably used are acrylic acid, methacrylic acid, methyl acrylate, methyl methacrylate, ethyl acrylate, ethyl methacrylate, n-butyl acrylate, n-butyl methacrylate, 2-ethylhexyl acrylate, 2-ethylhexyl methacrylate, acrylonitrile and methacrylonitrile. Any of these monomers may be used alone or two or more of these monomers may be used.

Specific examples of the material monomer constituting the carboxylic acid vinyl ester monomer include: monofunctional aliphatic carboxylic acid vinyl esters such as vinyl formate, vinyl acetate, vinyl propionate, vinyl butyrate, vinyl caproate, vinyl caprylate, vinyl caprate, vinyl laurate, vinyl myristate, vinyl palmitate, vinyl stearate, isopropenyl acetate, 1-butenyl acetate, vinyl pivalate, vinyl 2-ethylhexanoate and vinyl cyclohexanecarboxylate; aromatic carboxylic acid vinyl esters such as vinyl benzoate and vinyl cinnamate; and polyfunctional carboxylic acid vinyl esters such as vinyl monochloroacetate, divinyl adipate, vinyl methacrylate, vinyl crotonate and vinyl sorbate. Among them, vinyl acetate is preferably used. Any of these monomers may be used alone or two or more of these monomers may be used.

Specific examples of the material monomer constituting the aromatic vinyl monomer include styrene, $\alpha$-methylstyrene, p-methylstyrene, $\alpha$-methyl-p-methylstyrene, p-methoxystyrene, o-methoxystyrene, 2,4-dimethylstyrene, 1-vinylnaphthalene, chlorostyrene, bromostyrene, divinylbenzene and vinyltoluene. Among them, styrene and $\alpha$-methylstyrene are preferably used. Any of these monomers may be used alone or two or more of these monomers may be used.

Specific examples of the material monomer constituting the unsaturated dicarboxylic anhydride monomer include maleic anhydride, itaconic anhydride, glutaconic anhydride, citraconic anhydride and aconitic anhydride. Among them, maleic anhydride is preferably used. Any of these monomers may be used alone or two or more of these monomers may be used.

Specific examples of the material monomer constituting the unsaturated dicarboxylic acid monomer include maleic acid, monoethyl maleate, itaconic acid and phthalic acid. Among them, maleic acid and itaconic acid are preferably used. Any of these monomers may be used alone or two or more of these monomers may be used.

Specific examples of the material monomer constituting the aliphatic vinyl monomer include ethylene, propylene and butadiene. Specific examples of the material monomer constituting the maleimide monomer include maleimide, N-methylmaleimide, N-ethylmaleimide, N-propylmaleimide, N-isopropylmaleimide, N-cyclohexylmaleimide, N-phenylmaleimide, N-(p-bromophenyl)maleimide and N-(chlorophenyl)maleimide. Specific examples of the material monomer constituting another vinyl monomer include N-vinyldiethylamine, N-acetylvinylamine, allylamine, methallylamine, N-methylallylamine and p-aminostyrene. Any of these monomers may be used alone or two or more of these monomers may be used.

According to the embodiment of the invention, the glass transition temperature of the polymer including the glycidyl group-containing vinyl monomer is not specifically limited, but is preferably in the range of 30 to 100°C, is more preferably in the range of 40 to 70°C and is most preferably in the range of 50 to 65°C, in terms of the excellent mixing workability and excellent molding processability. The glass transition temperature herein means a midpoint glass transition temperature measured by DSC at a heating rate of 20°C/ minute according to the method of JIS K7121. The glass transition temperature of the polymer including the glycidyl group-containing vinyl monomer is controllable by adjusting the composition of the copolymerizable component. The glass transition temperature is generally increased by copolymerization of an aromatic vinyl monomer such as styrene, while being decreased by copolymerization of an acrylic ester monomer such as butyl acrylate.

According to the embodiment of the invention, the polymer including the glycidyl group-containing vinyl monomer generally includes a volatile component, because of the remaining unreacted material monomer and the remaining solvent. The amount of the residual nonvolatile component is not specifically limited, but a greater amount of the nonvolatile component is preferable in terms of suppression of the gas emission. Specifically, the amount of the nonvolatile component is preferably not less than 95% by weight, is more preferably not less than 97% by weight, is furthermore preferably not less than 98% by weight and is most preferably not less than 98.5% by weight. The nonvolatile component herein indicates a ratio of the remaining amount when 10 g of a sample is heated under nitrogen atmosphere at 110°C for 1 hour.

According to the embodiment of the invention, a sulfur compound may be used as a chain transfer agent (molecular weight modifier) to provide a low-molecular weight oligomer in the process of manufacturing the polymer including the glycidyl group-containing vinyl monomer. In this case, the polymer including the glycidyl group-containing vinyl monomer generally contains sulfur. The sulfur content in the polymer including the glycidyl group-containing vinyl monomer is not specifically limited, but a less sulfur content is preferable in terms of suppression of odor. Specifically, the content of sulfur atoms is preferably not greater than 1000 ppm, is more preferably not greater than 100 ppm, is furthermore preferably not greater than 10 ppm and is especially preferably not greater than 1 ppm.

According to the embodiment of the invention, the production method of the polymer including the glycidyl group-containing vinyl monomer is not specifically limited as long as the conditions specified by the invention are fulfilled, and may be any of known polymerization methods such as bulk polymerization, solution polymerization, suspension polymerization and emulsion polymerization. In any of these methods, for example, a polymerization initiator, a chain transfer agent and a solvent may be used, and these may remain as the impurities in the polymer including the glycidyl group-containing vinyl monomer. The amount of such impurities is not specifically limited, but a less amount of impurities is preferable in terms of suppression of deterioration of the heat resistance and the weather resistance. Specifically, the amount of impurities relative to the resulting polymer is preferably not greater than 10% by weight, is more preferably not greater than 5% by weight, is furthermore preferably not greater than 3% by weight and is especially preferably not greater than 1% by weight.

As the production method of the polymer including the glycidyl group-containing vinyl monomer which satisfies the above conditions of the molecular weight, the glass transition temperature, the amount of the nonvolatile component, the sulfur content and the amount of impurities, a method of continuous bulk polymerization at a high temperature of not lower than 150°C and under a pressurizing condition (preferably not less than 1 MPa) for a short time period (preferably 5 minutes to 30 minutes) is preferable in terms of the high polymerization rate and the absence of a polymerization initiator, a chain transfer agent and a solvent which lead to the impurities and sulfur content.

According to the embodiment of the invention, commercially available products of the polymer including the glycidyl group-containing vinyl monomer include "MARPROOF" manufactured by NOF Corporation, "Joncryl" manufactured by BASF and "ARUFON" manufactured by TOAGOSEI CO., LTD.

Examples of the oxazoline compound usable as the molecular chain linking agent according to the embodiment of the invention include 2-methoxy-2-oxazoline, 2-ethoxy-2-oxazoline, 2-propoxy-2-oxazoline, 2-butoxy-2-oxazoline, 2-pentyloxy-2-oxazoline, 2-hexyloxy-2-oxazoline, 2-heptyloxy-2-oxazoline, 2-octyloxy-2-oxazoline, 2-nonyloxy-2-oxazoline, 2-decyloxy-2-oxazoline, 2-cyclopentyloxy-2-oxazoline, 2-cyclohexyloxy-2-oxazoline, 2-allyloxy-2-oxazoline, 2-methallyloxy-2-oxazoline, 2-crotyloxy-2-oxazoline, 2-phenoxy-2-oxazoline, 2-cresyl--2-oxazoline, 2-o-ethylphenoxy-2-oxazoline, 2-o-propylphenoxy-2-oxazoline, 2-o-phenylphenoxy-2-oxazoline, 2-m-ethylphenoxy-2-oxazoline, 2-m-propylphenoxy-2-oxazoline, 2-p-phenylphenoxy-2-oxazoline, 2-methyl-2-oxazoline, 2-ethyl-2-oxazoline, 2-propyl-2-oxazoline, 2-butyl-2-oxazoline, 2-pentyl-2-oxazoline, 2-hexyl-2-oxazoline, 2-heptyl-2-oxazoline, 2-octyl-2-oxazoline, 2-nonyl-2-oxazoline, 2-decyl-2-oxazoline, 2-cyclopentyl-2-oxazoline, 2-cyclohexyl-2-oxazoline, 2-allyl-2-oxazoline, 2-methallyl-2-oxazoline, 2-crotyl-2-oxazoline, 2-phenyl-2-oxazoline, 2-o-ethylphenyl-2-oxazoline, 2-o-propylphenyl-2-oxazoline, 2-o-phenylphenyl-2-oxazoline, 2-m-ethylphenyl-2-oxazoline, 2-m-propylphenyl-2-oxazoline, 2-p-phenylphenyl-2-oxazoline, 2,2'-bis(2-oxazoline), 2,2'-bis(4-methyl-2-oxazoline), 2,2'-bis(4,4'-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4'-dimethyl-2-oxazoline), 2,2'-m-phenylenebis(4-methyl-2-oxazoline), 2,2'-m-phenylenebis(4,4'-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4'-dimethyl-2-oxazoline), 2,2'-9,9'-diphenoxyethanebis(2-oxazoline), 2,2'-cyclohexylenebis(2-oxazoline) and 2,2'-diphenylenebis(2-oxazoline). Additionally, polyoxazoline compounds including any of the above compounds as the monomer unit are also usable.

Examples of the oxazine compound usable as the molecular chain linking agent according to the embodiment of the invention include 2-methoxy-5,6-dihydro-4H-1,3-oxazine, 2-ethoxy-5,6-dihydro-4H-1,3-oxazine, 2-propoxy-5,6-dihydro-4H-1,3-oxazine, 2-butoxy-5,6-dihydro-4H-1,3-oxazine, 2-pentyloxy-5,6-dihydro-4H-1,3-oxazine, 2-hexyloxy-5,6-dihydro-4H-1,3-oxazine, 2-heptyloxy-5,6-dihydro-4H-1,3-oxazine, 2-octyloxy-5,6-dihydro-4H-1,3-oxazine, 2-nonyloxy-5,6-dihydro-4H-1,3-oxazine, 2-decyloxy-5,6-dihydro-4H-1,3-oxazine, 2-cyclopentyloxy-5,6-dihydro-4H-1,3-oxazine, 2-cyclohexyloxy-5,6-dihydro-4H-1,3-oxazine, 2-allyloxy-5,6-dihydro-4H-1,3-oxazine, 2-methallyloxy-5,6-dihydro-4H-1,3-oxazine and 2-crotyloxy-5,6-dihydro-4H-1,3-oxazine. Other examples include 2,2'-bis(5,6-dihydro-4H-1,3-oxazine), 2,2'-methylenebis(5,6-dihydro-4H-1,3-oxazine), 2,2'-ethylenebis(5,6-dihydro-4H-1,3-oxazine), 2,2'-propylenebis(5,6-dihydro-4H-1,3-oxazine), 2,2'-butylenebis(5,6-dihydro-4H-1,3-oxazine), 2,2'-hexamethylenebis(5,6-dihydro-4H-1,3-oxazine), 2,2'-p-phenylenebis(5,6-dihydro-4H-1,3-oxazine), 2,2'-m-phenylenebis(5,6-dihydro-4H-1,3-oxazine), 2,2'-naphthylenebis(5,6-dihydro-4H-1,3-oxazine) and 2,2'-P,P'-diphenylenebis(5,6-dihydro-4H-1,3-oxazine). Additionally, polyoxazine compounds including any of the above compounds as the monomer unit are also usable.

Among the above oxazoline compounds and oxazine compounds, 2,2'-m-phenylenebis(2-oxazoline) and 2,2'-p-phenylenebis(2-oxazoline) are preferable.

The carbodiimide compound usable as the molecular chain linking agent according to the embodiment of the invention is a compound having at least one carbodiimide group expressed as (-N=C=N-) in the molecule. Such a carbodiimide compound may be produced, for example, by heating an organic isocyanate in the presence of an adequate catalyst to accelerate the decarboxylation reaction.

Examples of the carbodiimide compound include: mono- or di-carbodiimide compounds such as diphenylcarbodiimide, dicyclohexylcarbodiimide, di-2,6-dimethylphenylcarbodiimide, diisopropylcarbodiimide, dioctyldecylcarbodiimide, di-o-toluylcarbodiimide, di-p-toluylcarbodiimide, di-p-nitrophenylcarbodiimide, di-p-aminophenylcarbodiimide, di-p-hydroxyphenylcarbodiimide, di-p-chlorophenylcarbodiimide, di-o-chlorophenylcarbodiimide, di-3,4-dichlorophenylcarbodiimide, di-2,5-dichlorophenylcarbodiimide, p-phenylene-bis-o-toluylcarbodiimide, p-phenylene-bis-dicyclohexylcarbodiimide, p-phenylene-bis-di-p-chlorophenylcarbodiimide, 2,6,2',6'-tetraisopropyldiphenylcarbodiimide, hexamethylene-bis-cyclohexylcarbodiimide, ethylene-bis-diphenylcarbodiimide, ethylene-bis-di-cyclohexylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-diisopropylphenylcarbodiimide, N,N'-di-2,6-di-t-butylphenylcarbodiimide, N-toluyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, N,N'-di-p-toluylcarbodiimide, N,N'-benzylcarbodiimide, N-octadecyl-N'-phenylcarbodiimide, N-benzyl-N'-phenylcarbodiimide, N-octadecyl-N'-tolylcarbodiimide, N-cyclohexyl-N'-tolylcarbodiimide, N-phenyl-N'-tolylcarbodiimide, N-benzyl-N'-tolylcarbodiimide, N,N'-di-o-ethylphenylcarbodiimide, N,N'-di-p-ethylphenylcarbodiimide, N,N'-di-o-isopropylphenylcarbodiimide, N,N'-di-p-isopropylphenylcarbodiimide, N,N'-di-o-isobutylphenylcarbodiimide, N,N'-di-p-isobutylphenylcarbodiimide, N,N'-di-2,6-diethylphenylcarbodiimide, N,N'-di-2-ethyl-6-isopropylphenylcarbodiimide, N,N'-di-2-isobutyl-6-isopropylphenylcarbodiimide, N,N'-di-2,4,6-trimethylphenylcarbodiimide, N,N'-di-2,4,6-triisopropylphenylcarbodiimide and N,N'-di-2,4,6-triisobutylphenylcarbodiimide; and polycarbodiimides such as poly(1,6-hexamethylenecarbodiimide), poly(4,4'-methylenebiscyclohexylcarbodiimide), poly(1,3-cyclohexylenecarbodiimide), poly(1,4-cyclohexylenecarbodiimide), poly(4,4'-diphenylmethanecarbodiimide), poly(3,3'-dimethyl-4,4'-diphenylmethanecarbodiimide), poly(naphthylenecarbodiimide), poly(p-phenylenecarbodiimide), poly(m-phenylenecarbodiimide), poly(tolylcarbodiimide), poly(diisopropylcarbodiimide), poly(methyl-diisopropylphenylenecarbodiimide), poly(triethylphenylenecarbodiimide) and (triisoproylphenylenecarbodiimide). Among them, N,N'-di-2,6-diisopropylphenylcarbodiimide and 2,6,2',6'-tetraisopropyldiphenylcarbodiimide are preferable; and the polycarbodiimides are also preferable.

The mixing amount of the molecular chain linking agent is not specifically limited but is preferably not less than 0.01 parts by weight relative to 100 parts by weight of the polylactic acid resin, is more preferably not less than 0.2 parts by weight in terms of the thermal stability and the heat resistance of the molded product, and is furthermore preferably not less than 0.3 parts by weight in terms of the appearance of the molded product and the mechanical properties. The mixing amount of the molecular chain linking agent is also preferably not greater than 10 parts by weight relative to 100 parts by weight of the polylactic acid resin, is more preferably not greater than 2.0 parts by weight in terms of the thermal stability, is furthermore preferably not greater than 1 part by weight in terms of the heat resistance of the molded product and is most preferably not greater than 0.8 parts by weight in terms of the appearance of the molded product and the mechanical properties. The mixing amount of the molecular chain linking agent may, however, be less than 0.01 parts by weight or may exceed 10 parts by weight relative to 100 parts by weight of the polylactic acid resin.

<(D) Inorganic Nucleating Agent>

The polylactic acid resin composition used according to the embodiment of the invention may contain one inorganic nucleating agent or two or more different inorganic nucleating agents as necessary in such a range that does not damage the objects of the invention. The type of the inorganic nucleating agent used may be any of commonly known inorganic nucleating agents for thermoplastic resins. Specific examples include synthetic mica, clay, talc, zeolite, magnesium oxide, calcium sulfide, boron nitride, neodymium oxide and triclinic inorganic nucleating agents. The inorganic nucleating agent is preferably modified with an organic substance, in order to enhance the dispersibility in the composition.

The mixing amount of the inorganic nucleating agent is not specifically limited, but is preferably not less than 0.01 parts by weight relative to 100 parts by weight of the polylactic acid resin, is more preferably not less than 1 part by weight in terms of the heat resistance of the molded product and is furthermore preferably not less than 2 parts by weight in terms of the appearance of the molded product and the molding processability. The mixing amount of the inorganic nucleating agent is also preferably not greater than 20 parts by weight relative to 100 parts by weight of the polylactic acid resin, is more preferably not greater than 10 parts by weight in terms of the heat resistance of the molded product and is furthermore preferably not greater than 5 parts by weight in terms of the appearance of the molded product and the molding processability. The mixing amount of the inorganic nucleating agent may, however, be less than 0.01 parts by weight or may exceed 20 parts by weight relative to 100 parts by weight of the polylactic acid resin.

<Other Additives>

The polylactic acid resin composition according to the embodiment of the invention may contain general additives in such a range that does not damage the objects of the invention. Such additives include, for example, catalyst deactivating agents, plasticizers, impact modifiers, fillers, flame retardants, ultraviolet absorbers, heat stabilizers, lubricants, mold releasing agents, coloring agents including dyes (e.g., nigrosine) and a pigments (e.g., cadmium sulfide and phthalocyanine), coloring inhibitors (e.g., phosphites and hypophosphites), conducting agents or coloring agents (e.g., carbon black), sliding modifiers (e.g., graphite and fluororesins) and antistatic agents. One of such additives or two or more different additives may be added to the polylactic acid resin composition.

Examples of the catalyst deactivating agent include hindered phenolic compounds, thioether compounds, vitamin compounds, triazole compounds, polyamine compounds, hydrazine derivative compounds and phosphorus compounds. Any of these may be used in combination. Among them, the catalyst deactivating agent used preferably includes at least one phosphorous compound, and phosphate compounds and phosphite compounds are more preferable. Preferable specific examples include "Adekastab" AX-71 (dioctadecyl phosphate), PEP-8 (distearyl pentaerythritol diphosphite), PEP-36 (cyclic neopentanetetrayl bis(2,6-t-butyl-4-methylphenyl) phosphite manufactured by ADEKA Corporation.

Examples of the plasticizer include polyalkylene glycol plasticizers, polyester plasticizers, polycarboxylate plasticizers, glycerol plasticizers, phosphate plasticizers, epoxy plasticizers, fatty acid amides such as stearamide and ethylene bis-stearamide, pentaerythritol, various sorbitols, polyacrylates, silicone oil and paraffins. In terms of the bleed-out resistance, available examples include: polyalkylene glycol plasticizers such as polyalkylene glycols and their terminal blocked compounds including terminal epoxy modified compounds, terminal ester modified compounds and terminal ether modified compounds, for example, polyethylene glycol, polypropylene glycol, poly(ethylene oxide/ propylene oxide) block and/or random copolymers, polytetramethylene glycol, ethylene oxide addition polymers of bisphenols, propylene oxide addition polymers of bisphenols, tetrahydrofuran addition polymers of bisphenols; polycarboxylate plasticizers such as bis(butyl diglycol) adipate, methyl diglycol butyl diglycol adipate, benzyl methyl diglycol adipate, acetyl tributyl citrate, methoxycarbonylmethyl dibutyl citrate and ethoxycarbonylmethyl dibutyl citrate; and glycerol plasticizers such as glycerol monoacetomonolaurate, glycerol diacetomonolaurate, glycerol monoacetomonostearate, glycerol diacetomonooleate and glycerol monoacetomonomontanate.

Examples of the impact modifier include: natural rubbers; polyethylenes such as low-density polyethylenes and high-density polyethylenes; polypropylenes; impact modified polystyrenes; polybutadienes; polyester elastomers such as styrene/ butadiene copolymers, ethylene/ propylene copolymers, ethylene/ methyl acrylate copolymers, ethylene/ ethyl acrylate copolymers, ethylene/ vinyl acetate copolymers, ethylene/ glycidyl methacrylate copolymers, polyethylene terephthalate/ poly(tetramethylene oxide) glycol block copolymers and polyethylene terephthalate/ isophthalate/ poly(tetramethylene oxide) glycol copolymers; butadiene core shell elastomers such as MBS; and acrylic core shell elastomers. Any one of these or two or more of these may be used. Specific examples of the butadiene or acrylic core shell elastomers include "Metablen" manufactured by MITSUBISHI RAYON CO., LTD., "Kane ace" manufactured by KANEKA CORPORATION and "PARALOID" manufactured by Rohm and Haas.

Any of fibrous, plate-like, powdery and granular fillers may be used as the filler. Specific examples include: glass fibers; carbon fibers such as PAN-based and pitch-based carbon fibers; and metal fibers such as stainless steel fibers, aluminum fibers and brass fibers. Other examples include: organic fibers such as aromatic polyamide fibers; gypsum fibers; ceramic fibers; asbestos fibers; zirconia fibers; alumina fibers; silica fibers; fibrous or whisker fibers such as titanium oxide fibers, silicon carbide fibers, rock wool, potassium titanate whiskers, barium titanate whiskers, aluminum borate whiskers, and silicon nitride whiskers; kaolin, silica, calcium carbonate, glass beads, glass flakes, glass microballoons, molybdenum disulfide, wollastonite, montmorillonite, titanium oxide, zinc oxide, calcium polyphosphate, graphite and barium sulfate.

Examples of the flame retardant include red phosphorus, brominated polystyrene, brominated polyphenylene ether, brominated polycarbonate, magnesium hydroxide, melamine, cyanuric acid and its salts and silicon compounds. Examples of the ultraviolet absorber include resorcinol, salicylates, benzotriazole and benzophenone. Examples of the heat stabilizer include hindered phenols, hydroquinone and phosphites and their substitutes. Examples of the mold releasing agent include montanoic acid and its salts, esters, half esters, stearyl alcohol, stearamide and polyethylene wax.

At least one or more of other thermoplastic resins (e.g., polyethylenes, polypropylenes, polystyrenes, acrylonitrile/ butadiene/ styrene copolymers, polyamides, polycarbonates, polyphenylene sulfide resins, polyether ether ketone resins, polyesters, polysulfones, polyphenylene oxides, polyacetals, polyimides, polyether imides and cellulose esters), thermosetting resins (e.g., phenol resins, melamine resins, polyester resins, silicon resins and epoxy resins) or soft thermoplastic resins (e.g., ethylene/ glycidyl methacrylate copolymers, polyester elastomer, polyamide elastomers, ethylene/ propylene terpolymers and ethylene/ butene-1 copolymers) may further be added to the polylactic acid resin composition according to the embodiment of the invention in such a range that does not damage the objects of the invention.

<Production Method of Polylactic Acid Resin Composition>

The mixing method of the respective additives is not specifically limited, but any of known methods may be employed. The mixing method by melt kneading is, however, preferable in terms of the easiness of the operation and the homogeneous dispersibility of the additives.

The method of mixing the organic nucleating agent and the respective additives by melt kneading is not specifically limited, but any of known methods may be employed for melt kneading. Available examples of a kneading machine include a single screw extruder, a twin screw extruder, a plastomill, a kneader and a stirring tank reactor equipped with a decompression device. In terms of homogeneous and sufficient kneading, it is preferable to use either the single screw extruder or the twin screw extruder.

The timing of mixing the respective additives is not specifically limited. For example, the respective additives may be pre-mixed with poly-L-lactic acid and poly-D-lactic acid as the raw material; the respective additives may be added simultaneously in the course of mixing poly-L-lactic acid and poly-D-lactic acid; or the respective additives may be added to the pre-produced polylactic acid resin. When solid-phase polymerization is performed in the course of production of the polylactic acid resin, it is preferable that the polymerization catalyst is in the active state, so that the catalyst deactivating agent is preferably added after the solid-phase polymerization. When solid-phase polymerization is performed in the course of production of the polylactic acid resin, the excessively high crystallinity of the intermediate polylactic acid resin product in the middle of polymerization reduces the solid-phase polymerizability, so that the organic nucleating agent (B) and the inorganic nucleating agent (D) are preferably added after the solid-phase polymerization.

The temperature condition of melt kneading is preferably not lower than 140°C, is more preferably not lower than 160°C and is especially preferably not lower than 180°C. The temperature condition of melt kneading is also preferably not higher than 250°C, is more preferably not higher than 230°C and is especially preferably not higher than 220°C. Controlling the temperature for mixing to be not higher than 250°C suppresses reduction in molecular weight of the mixture. Controlling the temperature for mixing to be not lower than 140°C, on the other hand, suppresses reduction in flowability of the mixture.

The time condition of melt kneading is preferably not shorter than 0.1 minutes, is more preferably not shorter than 0.3 minutes and is especially preferably not shorter than 0.5 minutes. The time condition of melt kneading is also preferably not longer than 10 minutes, is more preferably not longer than 5 minutes and is especially preferably not longer than 3 minutes. Controlling the time for melt kneading to be not shorter than 0.1 minutes facilitates the respective additives to be homogeneously mixed. Controlling the time for melt kneading to be not longer than 10 minutes readily suppresses thermal degradation by mixing.

The pressure condition of mixing is not specifically limited but may be under air atmosphere or under inert gas atmosphere such as nitrogen.

In melt kneading with an extruder, the method of feeding the respective additives to the extruder is not specifically limited. Available examples include: a method of feeding the polylactic acid resin and the respective additives together from a resin hopper; and a method of using a side resin hopper as necessary and separately feeding the polylactic acid resin and the respective additives from the resin hopper and the side resin hopper.

As the screw element in the extruder, it is preferable to provide a mixing unit with a kneading element in order to homogeneously mix the polylactic acid resin and the respective additives.

The form of the mixture after melt kneading the polylactic acid resin and the respective additives is not specifically limited but may be any form such as block, film, pellet or powder. In terms of the efficient progress of the respective steps, however, the pellet form or the powder form is preferable. The method of making the pellet form may be, for example, a method that extrudes the mixture after melt kneading into strands and pelletizes the extruded strands or a method that extrudes the mixture after melt kneading into water and pelletizes the extruded mixture with an underwater cutter. The method of making the powder form may be, for example, a method that pulverizes the mixture with a pulverizer, such as a mixer, a blender, a ball mill or a hammer mill.

As described above, the polylactic acid resin composition according to the embodiment of the invention may be produced by adding and melt kneading the respective additives to and with the poly-L-lactic acid component and the poly-D-lactic acid component or to and with the polylactic acid resin comprised of the poly-L-lactic acid component and the poly-D-lactic acid component. After production of the polylactic acid resin composition according to the embodiment of the invention by melt kneading, however, it is preferable to additionally perform the crystallization step at 70 to 90°C and the devolatilization step at 130 to 150°C for this polylactic acid resin composition, in order to improves the performance (physical properties) of the polylactic acid resin composition according to the embodiment of the invention. Alternatively the polylactic acid resin composition according to the embodiment of the invention may be produced by performing a first step of adding and melt kneading the various additives including the organic nucleating agent to obtain a mixture; a second step of crystallizing the obtained mixture at 70 to 90°C; and a third step of devolatilizing the above mixture at 130 to 150°C. In this latter case, the above mixture obtained in the first step and the above mixture obtained in the second step may not be necessarily the polylactic acid resin composition according to the embodiment of the invention.

The time of the crystallization step is preferably not shorter than 3 hours and is more preferably not shorter than 5 hours in terms of suppressing fusion between pellets or between powders in the subsequent devolatilization step. Controlling the crystallization time to be not shorter than 3 hours enables sufficient crystallization and easily suppresses fusion between pellets or between powders in the subsequent devolatilization step.

The time of the devolatilization step is preferably not shorter than 3 hours, is more preferably not shorter than 4 hours and is furthermore preferably not shorter than 5 hours in terms of reduction in acid value b y removal of by-products.

The above crystallization step and the above devolatilization step are preferably performed under vacuum or under inert gas flow such as dry nitrogen. The degree of vacuum in devolatilization under vacuum is preferably not greater than 150 Pa, is more preferably not greater than 75 Pa and is especially preferably not greater than 20 Pa. The flow rate in devolatilization under inert gas flow is preferably not lower than 0.1 ml/ minute relative to 1 g of the mixture, is more preferably not lower than 0.5 ml/ minute and is especially preferably not lower than 1.0 ml/ minute. The above flow rate is also preferably not higher than 2000 ml/ minute relative to 1 g of the mixture, is more preferably not higher than 1000 ml/ minute and is especially preferably not higher than 500 ml/ minute.

<Molded Product>

The polylactic acid resin composition of the invention may be used as, for example, films, sheets, fibers and cloths, unwoven fabrics, injection molded products, extrusion molded products, vacuum-molded or pressure-molded products, blow molded products and complexes with other materials.

<Applications of Molded Product>

The molded products including the polylactic acid resin composition and the polylactic acid block copolymer according to the invention are effectively applicable to agricultural materials, horticultural materials, fishing materials, civil engineering and building materials, stationary materials, medical products, automobile components, electric and electronic components, optical films and other applications.

Specific examples of applications include: electric and electronic components such as coil bobbins, optical pickup chasses, motor casings, laptop computer housings and internal components, CRT display housings and internal components, printer housings and internal components, portable terminal housings and internal components such as cell phones, mobile PCs and handheld mobiles, housings and internal components of storage media (e.g., CD, DVD, PD and FDD) drives, housings and internal components of copying machines, housings and internal components of facsimiles and parabola antennas. Applications also include: household and office electric appliance components such as VTR components, TV set components, irons, hair dryers, rice cooker components, microwave oven components, audio components, video equipment components including cameras and projectors, substrates of optical recording media including Laserdiscs (registered trademark), compact discs (CD), CD-ROM, CD-R, CD-RW, DVD-ROM, DVD-R, DVD-RW, DVD-RAM and Blu-ray discs, lighting and illumination components, refrigerator components, air conditioner components, typewriter components and word processor components. Applications further include: housings and internal components of electronic musical instruments, home-use game consoles and handheld game consoles; electric and electronic components such as various gears, various casings, sensors, LEP lamps, connectors, sockets, resistors, relay cases, switches, coil bobbins, capacitors, variable capacitor cases, optical pickups, oscillators, various terminal boards, transformers, plugs, printed wiring boards, tuners, speakers, microphones, headphones, small motors, magnetic head bases, power modules, semiconductors, liquid crystal, FDD carriages, FDD chasses, motor brush holders, transformer articles and coil bobbins; architectural articles such as sliding door rollers, blind curtain parts, pipe joints, curtain liners, blind components, gas meter components, water meter components, water heater components, roof panels, heat-insulating walls, adjusters, floor posts, ceiling suspenders, stairways, doors and floors; fisheries-related articles such as fish bait bags; civil engineering-related articles such as vegetation nets, vegetation mats, weed growth prevention bags, weed growth prevention nets, protection sheets, slope protection sheets, ash-scattering prevention sheets, drain sheets, water-holding sheets, sludge dewatering bags and concrete forms; automobile underhood components such as air flow meters, air pumps, thermostat housings, engine mounts, ignition bobbins, ignition cases, clutch bobbins, sensor housings, idle speed control valves, vacuum switching valves, ECU (Electronic Control Unit) housings, vacuum pump cases, inhibitor switches, rotation sensors, acceleration sensors, distributor caps, coil bases, actuator cases for ABS, radiator tank tops and bottoms, cooling fans, fan shrouds, engine covers, cylinder head covers, oil caps, oil pans, oil filters, fuel caps, fuel strainers, distributor caps, vapor canister housings, air cleaner housings, timing belt covers, brake booster components, various casings, various tubes, various tanks, various hoses, various clips, various valves and various pipes; automobile interior components such as torque control levers, safety belt components, register blades, washer levers, window regulator handles, window regulator handle knobs, passing light levers, sun visor brackets, and various motor housings; automobile exterior components such as roof rails, fenders, garnishes, bumpers, door mirror stays, spoilers, hood louvers, wheel covers, wheel caps, grill apron cover frames, lamp reflectors, lamp bezels, and door handles; various automobile connectors such as wire harness connectors, SMJ connectors (transit connection connectors), PCB connectors (board connectors) and door grommet connectors; machine components such as gears, screws, springs, bearings, levers, key stems, cams, ratchets, rollers, water supply components, toy components, fans, guts, pipes, washing tools, motor components, microscopes, binoculars, cameras and timepieces; agricultural articles such as multi-films, tunnel films, bird sheets, seedling raising-pots, vegetation piles, seed tapes, germination sheets, house lining sheets, agricultural PVC film fasteners, slow-acting fertilizers, root protection sheets, horticultural nets, insect nets, seedling tree nets, printed laminates, fertilizer bags, sample bags, sand bags, animal damage preventive nets, attracting ropes and windbreak nets; sanitary articles; medical articles such as medical films; packaging films of, for example, calendars, stationary, clothing and foods; vessels and tableware such as trays, blisters, knives, forks, spoons, tubes, plastic cans, pouches, containers, tanks and baskets; containers and packages such as hot fill containers, microwave oven cooking container, cosmetics containers, wrapping sheets, foam cushioning materials, paper laminates, shampoo bottles, beverage bottles, cups, candy packs, shrinkable labels, cover materials, window envelopes, fruit baskets, tearable tapes, easy peel packages, egg packs, HDD packages, compost bags, recording medium packages, shopping bags and electric/electronic part wrapping films; various clothing articles; interior articles; carrier tapes, printed laminates, heat sensitive stencil printing films, mold releasing films, porous films, container bags, credit cards, ATM cards, ID cards, IC cards, optical elements, electrically-conductive embossed tapes, IC trays, golf tees, waste bags, plastic shopping bags, various nets, tooth brushes, stationery, clear file folders, bags, chairs, tables, cooler boxes, rakes, hose reels, plant pots, hose nozzles, dining tables, desk surfaces, furniture panels, kitchen cabinets, pen caps, and gas lighters.

Examples

The invention is described more specifically with reference to examples. The number of parts in the examples hereof is expressed by parts by weight. The following methods are employed for measurement of the physical properties.

(1) Amount of Linear Oligomer

A polymer solution was prepared by mixing 0.2 g of the polylactic acid resin composition and 3.0 g of a chloroform/ o-cresol mixed solvent having the 1/2 weight ratio in a 50 ml screw vial. While the above polymer solution was stirred with a magnetic stirrer, 30 ml of methanol was added for re-precipitation. White sediment polymer and additives were then removed by using a membrane filter of 1 micron in pore size, and a solution comprised of chloroform/ o-cresol/ methanol/ linear oligomer was obtained (solution 1). Subsequently, only chloroform/ methanol was removed by an using an evaporator, and a solution comprised of o-cresol and linear oligomer was obtained (solution 2). The obtained solution 2 was subjected to measurement in a deuterated chloroform solution with an NMR apparatus UNITY INOVA 500 manufactured by Varian Medical Systems Inc. using $^1$H as the measured nucleus and TMS or tetramethylsilane as the standard at the observing frequency of 125.7 MHz, the cumulative number of 16 times and the temperature of 15°C. The concentration of linear oligomer in o-cresol was calculated from the ratio of the integral value of a linear oligomer-derived methyl group peak observed in a chemical shift range of 1.26 to 1.55 ppm to the integral value of o-cresol-derived four methine group peaks observed in a range of 6.8 to 7.2 ppm in $^1$H-NMR. The amount of linear oligomer was calculated from the ratio of the calculated concentration of linear oligomer to the concentration of the supplied polylactic acid resin composition in o-cresol.

(2) Molecular Weight and Polydispersity

The weight-average molecular weight and the polydispersity were measured as poly(methyl methacrylate) standard equivalents obtained by gel permeation chromatography (GPC). For measurement of GPC, a differential refractometer Waters 410 manufactured by Waters Corporation was used as the detector, a high performance chromatography system MODEL 510 was used as the pump, and Shodex GPC HFIP-806M and Shodex GPC HFIP-LG connected in series were used as the column. The measurement condition was the flow rate of 1.0 mL/ minute, and hexafluoroisopropanol was used as the solvent, and 0.1 mL of each solution having a sample concentration of 1 mg/ mL was injected.

(3) Rate of Weight-Average Molecular Weight Retention after being Retained in Closed State

In a melt indexer (Type C-5059D2-1 manufactured by Toyo Seiki Seisaku-sho, Ltd., orifice diameter: 0.0825 inch, length: 0.315 inch) set at 220°C, 5 g of the polylactic acid resin composition was placed, and a delivery port was closed. The weight-average molecular weight (Mw2) of the polylactic acid resin composition after being retained in the closed state under a load of 250 g for 30 minutes was measured, and a rate of change (ΔMw) from the weight-average molecular weight (Mw1) prior to the melt retention was calculated according to Equation (1) given below:

$$\Delta Mw = (Mw1 - Mw2)/ Mw1 < 20\% \qquad (1)$$

(4) Stereocomplex Melting Point (Tmsc) and Melting Heat Quantity (ΔHmsc)

The melting point and the melting heat quantity of the obtained polylactic acid resin composition were measured with a differential scanning calorimeter (Model: DSC-7) manufactured by Perkin-Elmer Corp. The measurement conditions were the sample amount of 5 mg, under nitrogen atmosphere and the heating rate of 20°C/ minute.
The melting point herein indicates a peak top temperature at a crystal melting peak. The melting end temperature indicates a peak end temperature at the crystal melting peak. According to the obtained results, a heightened melting point (higher melting point) from the melting point of polylactic acid homo-crystal (single crystal of poly-L-lactic acid or single crystal of poly-D-lactic acid) indicates polylactic acid stereocomplexation, and non-substantial change in melting point from the melting point of the polylactic acid homo-crystal indicates no polylactic acid stereocomplexation. In Examples, the melting point of poly-L-lactic acid or poly-D-lactic acid was a measured value when the temperature was increased from 30°C to 240°C at a heating rate of 20°C/ minute in a first heating process. The melting point of the polylactic acid resin composition was, on the other hand, a measured value when the temperature was increased from 30°C to 240°C at a heating rate of 20°C/ minute in a first heating process, was subsequently decreased to 30°C at a cooling rate of 20°C/ minute and was increased again from 30°C to 240°C at a heating rate of 20°C/ minute in a second heating process.

(5) Degree of Stereocomplexation (Sc)

The degree of stereocomplexation (Sc) of the obtained polylactic acid resin composition was calculated according to Equation (2) given below:

$$Sc = \Delta Hmsc/ (\Delta Hmh + \Delta Hmsc) \times 100 \qquad (2)$$

ΔHmh represents the sum of the crystal melting heat quantity of a poly-L-lactic acid single crystal and the crystal melting heat quantity of a poly-D-lactic acid single crystal appearing at the temperature of not lower than 150°C and lower than 190°C. ΔHmsc represents the crystal melting heat quantity of a stereocomplex crystal appearing at the temperature of not lower than 190°C and lower than 240°C. The degree of stereocomplexation of the polylactic acid resin composition was calculated from a crystal melting peak measured when the temperature was increased from 30°C to 240°C at the heating rate of 20°C/ minute in the first heating process, was subsequently decreased to 30°C at the cooling rate of 20°C/ minute and was increased again from 30°C to 240°C at the heating rate of 20°C/ minute in the second heating process.

(6) Cooling Crystallization Heat Quantity (ΔHc)

The cooling crystallization heat quantity (ΔHc) of the obtained polylactic acid resin composition was measured with a differential scanning calorimeter (Model: DSC-7) manufactured by Perkin-Elmer Corp. More specifically, the above cooling crystallization heat quantity (ΔHc) was a crystallization heat quantity measured under nitrogen atmosphere by a differential scanning calorimeter (DSC) when 5 mg of the sample was heated from 30°C to 240°C at the heating rate of 20°C/ minute, was kept at the constant temperature of 240°C for 3 minutes and was then cooled at the cooling rate of 20°C/ minute.

(7) Melt Viscosity

After the obtained polylactic acid resin composition was set in "CAPILOGRAPH 1C" manufactured by Toyo Seiki Seisaku-sho Ltd. using a capillary of 10 mm in length and 1 mm in diameter and was retained at a set temperature of 220°C for 5 minutes, the melt viscosity was measured at a shear rate of 243 sec$^{-1}$.

(8) Molding Processability (Molding Cycle Time)

The obtained polylactic acid resin composition was injection molded by using an injection molding machine (SG75H-MIV manufactured by Sumitomo Heavy Industries, Ltd.) at a cylinder temperature of 220°C and a mold temperature of 130°C, and a tensile test piece was manufactured for tensile test. The minimum molding time that enabled production of a non-deformed, solidified molded product (tensile test piece) was measured as the molding cycle time. The shorter molding cycle time indicates the better molding processability.

(9) Evaluation of Heat Resistance (Deflection temperature under low load of 0.45 MPa)

The obtained polylactic acid resin composition was injection molded by using an injection molding machine "FKS80" manufactured by KOMATSU LTD. at a set temperature of 220°C and a mold temperature of 130°C, and a molded product in conformity with ISO 75 was molded. The deflection temperature under low load (DTUL) was measured in conformity with ISO 75.

(10) Evaluation of Impact Resistance (Izod Impact Strength)

The obtained pellets were injection molded by using an injection molding machine "FKS80" manufactured by KOMATSU LTD. at a set temperature of 220°C and a mold temperature of 130°C. The Izod impact strength (notched) was measured in conformity with ASTM D256.

(11) Evaluation of Appearance of Molded Product

The obtained pellets were injection molded by using a large power-driven injection molding machine "J850ELIII" manufactured by the Japan Steel Works, LTD. at a set temperature of 220°C and a mold temperature of 130°C, and a box-like container of 300 mm × 400 mm × 100 mm in depth (thickness: 10 mm) having four pinpoint gates at four corners was obtained as a molded product. The appearance of the molded product was visually evaluated with respect to the appearance of gas bubbles in the vicinity of a middle part of the molded product and the surface roughness. The visual evaluation was based on the following evaluation criteria and their total score in five grade evaluation (maximum score: 5, minimum score: 1):

gas bubbles: the higher score indicates the less appearance of gas bubbles, and the lower score indicates the more appearance of gas bubbles; and
surface roughness: the higher score indicates the less surface roughness and the lower score indicates the more surface roughness.

The following raw materials were used in Examples:

(a) Poly-L-lactic acid and Poly-D-lactic acid

a-1: Poly-L-lactic acid obtained in Manufacturing Example 1 (Mw: 200 thousand, polydispersity: 1.8);
a-2: Poly-L-lactic acid obtained in Manufacturing Example 2 (Mw: 160 thousand, polydispersity: 1.7);
a-3: Poly-D-lactic acid obtained in Manufacturing Example 3 (Mw: 160 thousand, polydispersity: 1.7); and
a-4: Poly-D-lactic acid obtained in Manufacturing Example 4 (Mw: 35 thousand, polydispersity: 1.6).

[Manufacturing Example 1] Production of Poly-L-Lactic Acid (a-1)

The manufacturing method placed 50 parts of a 90% L-lactic acid aqueous solution in a reaction vessel equipped with a stirrer device and a reflux device, controlled the temperature to 150°C and then performed the reaction for 3.5 hours under gradually reduced pressure for removal of water. Subsequently the manufacturing method controlled the pressure to ordinary pressure under nitrogen atmosphere. After adding 0.02 parts of tin (II) acetate, the manufacturing method performed th polymerization reaction at 170°C for 7 hours under gradually reduced pressure to 13 Pa. The manufacturing method then performed crystallization under nitrogen atmosphere at 80°C for 5 hours, performed devolatilization under a pressure of 60 Pa at 140°C for 6 hours and at 150°C for 6 hours and subsequently performed solid-phase polymerization at 160°C for 18 hours to obtain the poly-L-lactic acid (a-1). The weight-average molecular weight of (a-1) was 200 thousand, the polydispersity was 1.8 and the melting point was 175°C.

[Manufacturing Example 2] Production of Poly-L-Lactic Acid (a-2)

The manufacturing method placed 50 parts of a 90% D-lactic acid aqueous solution in a reaction vessel equipped with a stirrer device and a reflux device, controlled the temperature to 150°C and then performed the reaction for 3.5 hours under gradually reduced pressure for removal of water. Subsequently the manufacturing method controlled the pressure to ordinary pressure under nitrogen atmosphere. After adding 0.02 parts of tin (II) acetate, the manufacturing method performed th polymerization reaction at 170°C for 7 hours under gradually reduced pressure to 13 Pa. The manufacturing method then performed crystallization under nitrogen atmosphere at 80°C for 5 hours, performed devolatilization under a pressure of 60 Pa at 140°C for 6 hours and at 150°C for 6 hours and subsequently performed solid-phase polymerization at 160°C for 15 hours to obtain the poly-L-lactic acid (a-2). The weight-average molecular weight of (a-2) was 160 thousand, the polydispersity was 1.7 and the melting point was 171°C.

[Manufacturing Example 3] Production of Poly-D-Lactic Acid (a-3)

The manufacturing method placed 50 parts of a 90% D-lactic acid aqueous solution in a reaction vessel equipped with a stirrer device and a reflux device, controlled the temperature to 150°C and then performed the reaction for 3.5 hours under gradually reduced pressure for removal of water. Subsequently the manufacturing method controlled the pressure to ordinary pressure under nitrogen atmosphere. After adding 0.02 parts of tin (II) acetate, the manufacturing method performed th polymerization reaction at 170°C for 7 hours under gradually reduced pressure to 13 Pa. The manufacturing method then performed crystallization under nitrogen atmosphere at 80°C for 5 hours, performed devolatilization under a pressure of 60 Pa at 140°C for 6 hours and at 150°C for 6 hours and subsequently performed solid-phase polymerization at 160°C for 15 hours to obtain the poly-D-lactic acid (a-3). The weight-average molecular weight of (a-3) was 160 thousand, the polydispersity was 1.7 and the melting point was 170°C.

[Manufacturing Example 4] Production of Poly-D-Lactic Acid (a-4)

The manufacturing method placed 50 parts of a 90% D-lactic acid aqueous solution in a reaction vessel equipped with a stirrer device and a reflux device, controlled the temperature to 150°C and then performed the reaction for 3.5 hours under gradually reduced pressure for removal of water. Subsequently the manufacturing method controlled the pressure to ordinary pressure under nitrogen atmosphere. After adding 0.02 parts of tin (II) acetate, the manufacturing method performed th polymerization reaction at 170°C for 7 hours under gradually reduced pressure to 13 Pa. The manufacturing method then performed crystallization under nitrogen atmosphere at 80°C for 5 hours, performed devolatilization under a pressure of 60 Pa at 140°C for 6 hours and at 150°C for 6 hours and subsequently performed solid-phase polymerization at 160°C for 10 hours to obtain the poly-D-lactic acid (a-4). The weight-average molecular weight of (a-4) was 35 thousand, the polydispersity was 1.6 and the melting point was 163°C.

(A) Polylactic Acid Resin

A-1: Polylactic acid resin obtained in Manufacturing Example 5 (Mw: 140 thousand, polydispersity: 2.2)
A-2: Polylactic acid resin obtained in Manufacturing Example 6 (block copolymer, Mw: 150 thousand, polydispersity: 2.0)
A-3: Polylactic acid resin obtained in Manufacturing Example 7 (Mw: 150 thousand, polydispersity: 1.8)

[Manufacturing Example 5] Production of Polylactic Acid Resin A-1

The manufacturing method dry blended 70 parts by weight of the poly-L-lactic acid (a-1) and 30 parts by weight of the poly-D-lactic acid (a-4), which were subjected to pre-crystallization under nitrogen atmosphere at the temperature of 80°C for 5 hours, with "Adekastab" AX-71 (dioctadecyl phosphate: manufactured by ADEKA Corporation) as the catalyst deactivating agent. The mixing amount of the catalyst deactivating agent was 0.2 parts by weight relative to the total 100 parts by weight of the poly-L-lactic acid and the poly-D-lactic acid. After dry blending, the mixture was melt kneaded by a twin-screw extruder with a vent. The twin-screw extruder has a structure of mixing under application of a shear with screws having a plasticization section set at a temperature of 210°C in a region of L/D= 10 from a resin hopper and a kneading disk in a region of L/D= 30. The poly-L-lactic acid, the poly-D-lactic acid and the catalyst deactivating agent were melt kneaded under reduced pressure at the kneading temperature of 210°C. The mixture obtained by melt kneading was pelletized.

The manufacturing method performed crystallization under nitrogen flow at the nitrogen flow rate of 20 ml/ minute at 80°C for 9 hours with respect to 1 g of the obtained mixture pellets. The manufacturing method subsequently performed devolatilization under nitrogen flow at the nitrogen flow rate of 20 ml/ minute at 140°C for 5 hours with respect to 1 g of the obtained mixture pellets, so as to obtain the polylactic acid resin (A-1).

[Manufacturing Example 6] Production of Polylactic Acid Resin A-2 (Block Copolymer)

The manufacturing method melt kneaded 70 parts by weight of the poly-L-lactic acid (a-1) and 30 parts by weight of the poly-D-lactic acid (a-4), which were subjected to pre-crystallization under nitrogen atmosphere at the temperature of 80°C for 5 hours by a twin-screw extruder. While the poly-L-lactic acid (a-1) was fed from a resin hopper, the poly-D-lactic acid (a-4) was added from a side resin hopper provided in a region of L/D= 30. The mixture obtained by melt kneading was pelletized. The same conditions as those of Manufacturing Example 5 except the place where the poly-D-lactic acid was added were employed for melt kneading.

The manufacturing method performed crystallization under nitrogen flow at the nitrogen flow rate of 20 ml/ minute at 80°C for 9 hours with respect to 1 g of the obtained mixture pellets. The manufacturing method subsequently performed devolatilization under nitrogen flow at the nitrogen flow rate of 20 ml/ minute at 140°C for 5 hours with respect to 1 g of the obtained mixture pellets. The manufacturing method then increased the temperature from 150°C to 160°C at a rate of 3°C/ minute under nitrogen flow at the nitrogen flow rate of 20 ml/ minute and performed solid-phase polymerization at 160°C for 12 hours with respect to 1 g of the mixture pellets, so as to obtain the polylactic acid resin (A-2) having the block copolymer structure.

[Manufacturing Example 7] Production of Polylactic Acid Resin A-3

The manufacturing method dry blended 50 parts by weight of the poly-L-lactic acid (a-2) and 50 parts by weight of the poly-D-lactic acid (a-3), which were subjected to pre-crystallization under nitrogen atmosphere at the temperature of 80°C for 5 hours, with a catalyst deactivating agent. "Adekastab" AX-71 (dioctadecyl phosphate: manufactured by ADEKA Corporation) was used as the catalyst deactivating agent. The mixing amount of the catalyst deactivating agent was 0.3 parts by weight relative to the total 100 parts by weight of the poly-L-lactic acid and the poly-D-lactic acid. After dry blending, the mixture was melt kneaded by a twin-screw extruder with a vent. The twin-screw extruder has a structure of mixing under application of a shear with screws having a plasticization section set at a temperature of 220°C in a region of L/D= 10 from a resin hopper and a kneading disk in a region of L/D= 30. The poly-L-lactic acid, the poly-D-lactic acid and the catalyst deactivating agent were melt kneaded under reduced pressure at the kneading temperature of 220°C. The mixture obtained by melt kneading was pelletized.

The manufacturing method performed crystallization under nitrogen flow at the nitrogen flow rate of 20 ml/ minute at 80°C for 9 hours with respect to 1 g of the obtained mixture pellets. The manufacturing method subsequently performed devolatilization under nitrogen flow at the nitrogen flow rate of 20 ml/ minute at 140°C for 5 hours with respect to 1 g of the obtained mixture pellets, so as to obtain the polylactic acid resin (A-3).

(B) Organic Nucleating Agent

B-1: Aluminum Phosphate ("Adekastab" NA-21 manufactured by ADEKA Corporation)

(C) Molecular Chain Linking Agent

C-1: Polycarbodiimide ("Carbodilite LA-1" manufactured by Nisshinbo Holdings Inc., carbodiimide equivalent: 247 g/mol); and
C-2: Epoxy Group-Containing Styrene/ Acrylic Ester Copolymer ("JONCRYL ADR-4368" manufactured by BASF, Mw (PMMA equivalent): 8000, epoxy equivalent: 285 g/mol).

(D) Inorganic Nucleating Agent

D-1: Talc ("MICRO ACE" P-6 manufactured by Nippon Talc. Co., Ltd.)

(Example 1)

The method dry blended 100 parts by weight of the polylactic acid resin (A-1) obtained in Manufacturing Example 5 with 0.2 parts by weight of the organic nucleating agent (B-1) and melt kneaded the mixture by a twin-screw extruder with a vent. The twin-screw extruder has a structure of mixing under application of a shear with screws having a plasticization section set at a temperature of 220°C in a region of L/D= 10 from a resin hopper and a kneading disk in a region of L/D= 30. The polylactic acid resin (A-1) and the organic nucleating agent (B-1) were melt kneaded under reduced pressure at the kneading temperature of 220°C. The mixture obtained by melt kneading was pelletized.

The method performed crystallization under nitrogen flow at the nitrogen flow rate of 20 ml/ minute at 80°C for 9 hours with respect to 1 g of the obtained mixture pellets. The method subsequently performed devolatilization under nitrogen flow at the nitrogen flow rate of 20 ml/ minute at 140°C for 5 hours with respect to 1 g of the obtained mixture pellets, so as to obtain a polylactic acid resin composition. The amount of linear oligomer, the molecular weight and the polydispersity of the obtained polylactic acid resin composition, the rate of weight-average molecular weight retention of the polylactic acid resin composition after being retained in the closed state, the melting point and the melting heat quantity, the degree of stereocomplexation (Sc), the cooling crystallization heat quantity ($\Delta$Hc), the molding cycle time, the heat resistance, the impact resistance and the appearance of a molded product are shown in Table 1.

(Example 2)

A polylactic acid resin composition was manufactured under the same conditions as those of Example 1, except that the devolatilization temperature was changed to 110°C and was similarly measured and evaluated. The results are shown in Table 1.

(Example 3 and Comparative Example 1)

Polylactic acid resin compositions were manufactured under the same conditions as those of Example 1, except that the types of the respective additives and their amounts added were changed as shown in Tables 1 and 2, and were similarly measured and evaluated. The results are shown in Tables 1 and 3.

(Example 4)

The method dry blended 100 parts by weight of the polylactic acid resin (A-2) obtained in Manufacturing Example 6 with 0.2 parts by weight of the organic nucleating agent (B-1) and 0.2 parts by weight of "Adekastab" AX-71 (dioctadecyl phosphate: manufactured by ADEKA Corporation) as the catalyst deactivating agent and subsequently melt kneaded the mixture by a twin-screw extruder with a vent. The twin-screw extruder has a structure of mixing under application of a shear with screws having a plasticization section set at a temperature of 220°C in a region of L/D= 10 from a resin hopper and a kneading disk in a region of L/D= 30. The polylactic acid resin (A-2), the organic nucleating agent (B-1) and the catalyst deactivating agent were melt kneaded under reduced pressure at the kneading temperature of 220°C. The mixture obtained by melt kneading was pelletized.

The method performed crystallization under nitrogen flow at the nitrogen flow rate of 20 ml/ minute at 80°C for 9 hours with respect to 1 g of the obtained mixture pellets. The method subsequently performed devolatilization under nitrogen flow at the nitrogen flow rate of 20 ml/ minute at 140°C for 5 hours with respect to 1 g of the obtained mixture pellets, so as to obtain a polylactic acid resin composition. The results of measurement and evaluation are shown in Table 1.

(Examples 5, 6 and 8 to 10 and Comparative Examples 2, 4 and 6)

Polylactic acid resin compositions were manufactured under the same conditions as those of Example 4, except that the types of the respective additives and their amounts added were changed as shown in Tables 1 and 2, and were similarly measured and evaluated. The results are shown in Tables 1 to 4.

(Example 7)

A polylactic acid resin composition was manufactured under the same conditions as those of Example 3, except that the devolatilization temperature was changed to 110°C and was similarly measured and evaluated. The results are shown in Table 2.

(Example 11)

The method dry blended 100 parts by weight of the polylactic acid resin (A-3) obtained in Manufacturing Example 7 with 0.3 parts by weight of the organic nucleating agent (B-1) and 0.5 parts by weight of the molecular chain linking agent (C-1) and subsequently melt kneaded the mixture by a twin-screw extruder with a vent. The twin-screw extruder has a structure of mixing under application of a shear with screws having a plasticization section set at a temperature of 220°C in a region of L/D= 10 from a resin hopper and a kneading disk in a region of L/D= 30. The polylactic acid resin (A-3), the organic nucleating agent (B-1) and the molecular chain linking agent (C-1) were melt kneaded under reduced pressure at the kneading temperature of 220°C. The mixture obtained by melt kneading was pelletized.

The method performed crystallization under nitrogen flow at the nitrogen flow rate of 20 ml/ minute at 80°C for 9 hours with respect to 1 g of the obtained mixture pellets. The method subsequently performed devolatilization under nitrogen flow at the nitrogen flow rate of 20 ml/ minute at 140°C for 5 hours with respect to 1 g of the obtained mixture pellets, so as to obtain a polylactic acid resin composition. The results of measurement and evaluation are shown in Table 3.

(Example 12 and Comparative Examples 3 and 5)

Polylactic acid resin compositions were manufactured under the same conditions as those of Example 4, except that the types of the respective additives and their amounts added were changed as shown in Table 2, and were similarly measured and evaluated. The results are shown in Tables 3 and 4.

[Table 1]

| | | | EX 1 | EX 2 | EX 3 | EX 4 | EX 5 |
|---|---|---|---|---|---|---|---|
| Polylactic Acid Resin (A) | Type | | A-1 | A-1 | A-1 | A-2 | A-2 |
| | Amount Added (parts by weight) | | 100 | 100 | 100 | 100 | 100 |
| Organic Nucleating Agent (B) | Type | | B-1 | B-1 | B-1 | B-1 | B-1 |
| | Amount Added (parts by weight) | | 0.2 | 0.2 | 0.4 | 0.2 | 0.3 |
| Molecular Chain Linking Agent (C) | Type | | - | - | C-1 | - | C-1 |
| | Amount Added (parts by weight) | | - | - | 0.5 | - | 0.25 |
| Inorganic Nucleating Agent (D) | Type | | - | - | - | - | - |
| | Amount Added (parts by weight) | | - | - | - | - | - |
| Devolatilization Condition | | | 140°C × 5hr | 110°C × 5hr | 140°C × 5hr | 140°C × 5hr | 140°C × 5hr |
| Amount of Linear Oligomer | % by weight | | 0.19 | 0.29 | 0.12 | 0.19 | 0.17 |
| Weight Average Molecular Weight | ten thousand | | 11 | 11 | 15 | 12 | 13 |
| Polydispersity | - | | 2.2 | 2.2 | 2.2 | 2.1 | 2.1 |
| Rate of Molecular Weight Retention | % | | 75 | 70 | 84 | 76 | 81 |
| Sc | % | | 92 | 94 | 100 | 95 | 98 |
| Tmsc | °C | | 211 | 211 | 209 | 209 | 210 |
| ΔHmsc | J/g | | 49 | 49 | 47 | 51 | 48 |
| ΔHc | J/g | | 29 | 34 | 41 | 31 | 35 |
| Melt Viscosity | Pa·s | | 120 | 90 | 130 | 110 | 120 |

(continued)

| | | EX 1 | EX 2 | EX 3 | EX 4 | EX 5 |
|---|---|---|---|---|---|---|
| Molding Cycle | seconds | 50 | 50 | 40 | 50 | 40 |
| Deflection Temperature under Load | °C | 110 | 110 | 130 | 120 | 130 |
| Appearance of Molded Product | five grade evaluation | 4 | 3 | 5 | 4 | 5 |
| Izod Impact Strength | KJ/m$^2$ | 29 | 22 | 41 | 31 | 36 |

[Table 2]

| | | EX 6 | EX 7 | EX 8 | EX 9 |
|---|---|---|---|---|---|
| Polylactic Acid Resin (A) | Type | A-2 | A-2 | A-2 | A-2 |
| | Amount Added (parts by weight) | 100 | 100 | 100 | 100 |
| Organic Nucleating Agent (B) | Type | B-1 | B-1 | B-1 | B-1 |
| | Amount Added (parts by weight) | 0.4 | 0.4 | 0.3 | 0.4 |
| Molecular Chain Linking Agent (C) | Type | C-1 | C-1 | C-1 | C-2 |
| | Amount Added (parts by weight) | 0.5 | 0.5 | 0.8 | 0.5 |
| Inorganic Nucleating Agent (D) | Type | - | - | - | - |
| | Amount Added (parts by weight) | - | - | - | - |
| Devolatilization Condition | | 140°C × 5hr | 110°C × 5hr | 140°C × 5hr | 140°C × 5hr |
| Amount of Linear Oligomer | % by weight | 0.12 | 0.30 | 0.08 | 0.06 |
| Weight Average Molecular Weight | ten thousand | 15 | 13 | 16 | 16 |
| Polydispersity | - | 2.1 | 2.2 | 2.3 | 2.3 |
| Rate of Molecular Weight Retention | % | 83 | 75 | 85 | 88 |
| Sc | % | 100 | 100 | 100 | 100 |
| Tmsc | °C | 209 | 207 | 206 | 209 |
| ΔHmsc | J/g | 47 | 45 | 45 | 50 |
| ΔHc | J/g | 41 | 39 | 30 | 45 |
| Melt Viscosity | Pa·s | 130 | 110 | 160 | 210 |
| Molding Cycle | seconds | 40 | 40 | 40 | 40 |
| Deflection Temperature under Load | °C | 130 | 130 | 130 | 130 |
| Appearance of Molded Product | five grade evaluation | 5 | 4 | 5 | 5 |
| Izod Impact Strength | KJ/m$^2$ | 43 | 37 | 51 | 52 |

[Table 3]

| | | | EX 10 | EX 11 | EX 12 | COMP EX 1 | COMP EX 2 |
|---|---|---|---|---|---|---|---|
| Polylactic Acid Resin (A) | | Type | A-2 | A-3 | A-3 | A-1 | A-2 |
| | | Amount Added (parts by weight) | 100 | 100 | 100 | 100 | 100 |
| Organic Nucleating Agent (B) | | Type | B-1 | B-1 | B-1 | B-1 | B-1 |
| | | Amount Added (parts by weight) | 0.4 | 0.3 | 0.4 | 0.1 | 0.1 |
| Molecular Chain Linking Agent (C) | | Type | C-1 | C-1 | C-1 | - | - |
| | | Amount Added (parts by weight) | 0.5 | 0.5 | 0.5 | - | - |
| Inorganic Nucleating Agent (D) | | Type | D-1 | - | - | - | - |
| | | Amount Added (parts by weight) | 2 | - | - | - | - |
| Devolatilization Condition | | | 140°C × 5hr | 140°C × 5hr | 140°C × 5hr | 140°C × 5hr | 140°C × 5hr |
| Amount of Linear Oligomer | | % by weight | 0.13 | 0.24 | 0.29 | 0.18 | 0.16 |
| Weight Average Molecular Weight | | ten thousand | 15 | 17 | 16 | 13 | 14 |
| Polydispersity | | - | 2.1 | 1.8 | 1.8 | 2.2 | 2.1 |
| Rate of Molecular Weight Retention | | % | 82 | 72 | 70 | 81 | 83 |
| Sc | | % | 100 | 100 | 100 | 90 | 92 |
| Tmsc | | °C | 209 | 203 | 200 | 212 | 209 |
| ΔHmsc | | J/g | 52 | 38 | 45 | 48 | 50 |
| ΔHc | | J/g | 52 | 34 | 41 | 12 | 15 |
| Melt Viscosity | | Pa·s s | 130 | 330 | 290 | 90 | 110 |
| Molding Cycle | | seconds | 30 | 40 | 40 | 90 | 80 |
| Deflection Temperature under Load | | °C | 150 | 110 | 120 | 90 | 100 |
| Appearance of Molded Product | | five grade evaluation | 5 | 3 | 3 | 5 | 5 |
| Izod Impact Strength | | KJ/m$^2$ | 41 | 54 | 49 | 34 | 36 |

[Table 4]

| | | COMP EX 3 | COMP EX 4 | COMP EX 5 | COMP EX 6 |
|---|---|---|---|---|---|
| Polylactic Acid Resin (A) | Type | A-3 | A-2 | A-3 | A-2 |
| | Amount Added (parts by weight) | 100 | 100 | 100 | 100 |

(continued)

| | | COMP EX 3 | COMP EX 4 | COMP EX 5 | COMP EX 6 |
|---|---|---|---|---|---|
| Organic Nucleating Agent (B) | Type | B-1 | B-1 | B-1 | B-1 |
| | Amount Added (parts by weight) | 0.1 | 1 | 1 | - |
| Molecular Chain Linking Agent (C) | Type | - | - | - | - |
| | Amount Added (parts by weight) | - | - | - | - |
| Inorganic Nucleating Agent (D) | Type | - | - | - | D-1 |
| | Amount Added (parts by weight) | - | - | - | 2 |
| Devolatilization Condition | | 140°C × 5hr | 140°C × 5hr | 140°C × 5hr | 140°C × 5hr |
| Amount of Linear Oligomer | % by weight | 0.27 | 0.71 | 0.93 | 0.17 |
| Weight Average Molecular Weight | ten thousand | 14 | 10 | 9 | 13 |
| Polydispersity | - | 1.8 | 1.7 | 1.6 | 2.2 |
| Rate of Molecular Weight Retention | % | 80 | 53 | 42 | 82 |
| Sc | % | 42 | 100 | 100 | 78 |
| Tmsc | °C | 217 | 205 | 207 | 210 |
| ΔHmsc | J/g | 21 | 58 | 52 | 44 |
| ΔHc | J/g | 6 | 57 | 52 | 54 |
| Melt Viscosity | Pa·s | 1200 | 120 | 120 | 120 |
| Molding Cycle | seconds | 180 | 30 | 30 | 70 |
| Deflection Temperature under Load | °C | 60 | 130 | 130 | 90 |
| Appearance of Molded Product | five grade evaluation | 5 | 1 | 1 | 5 |
| Izod Impact Strength | KJ/m$^2$ | 37 | 13 | 11 | 27 |

According to the results of Tables 1 to 3, in Examples 1, 3 to 6 and 8 to 10 which added the organic nucleating agent or both the organic nucleating agent and the molecular chain linking agent to the polylactic acid resin (A-1) or (A-2) and performed devolatilization at 140°C, the polylactic acid resin compositions have the amount of linear oligomer of not greater than 0.2% by weight and have excellent thermal stability. The results of molding evaluation using the above polylactic acid resin compositions also show the excellent molding processability, the excellent heat resistance, the excellent mechanical properties and the good appearance of a molded product.

In Examples 2 and 7 which employed the low devolatilization temperature, the polylactic acid resin compositions have the amount of linear oligomer of greater than 0.2% by weight but have the good molding processability, the good heat resistance and the good mechanical properties of a molded product.

In Examples 11 and 12 which added the organic nucleating agent or both the organic nucleating agent and the molecular chain linking agent to the polylactic acid resin (A-3) comprised of the poly-L-lactic acid and the poly-D-lactic acid both having the weight-average molecular weight of 160 thousand and performed devolatilization at 140°C, the polylactic acid resin compositions have the amount of linear oligomer of greater than 0.2% by weight but have the good molding processability, the good heat resistance and the good mechanical properties of a molded product.

In Comparative Examples 1 and 2 which added 0.1 parts by weight of the organic nucleating agent relative to 100 parts by weight of the polylactic acid resin, the polylactic acid resin compositions have the cooling crystallization heat quantity ΔHc of less than 20 J/g. This leads to significant deterioration of the molding processability and the heat resistance, so that the polylactic acid resin does not have the performance suitable for a molded product.

In Comparative Example 3 which added 0.1 parts by weight of the organic nucleating agent relative to 100 parts by weight of the polylactic acid resin (A-3) comprised of the poly-L-lactic acid and the poly-D-lactic acid both having the weight-average molecular weight of 160 thousand, the polylactic acid resin composition has the low degree of stereocomplexation (Sc), the low stereocomplex melting heat quantity ($\Delta$Hmsc) and the small $\Delta$Hc. This results in significant deterioration of the molding processability and the heat resistance. The high stereocomplex melting point (Tmsc) results in the extremely high melt viscosity and increases the amount of linear oligomer by shear heat generation in the course of melt kneading, thus causing deterioration of the thermal stability of the polylactic acid resin composition and the poor appearance of a molded product.

In Comparative Examples 4 to 5 which added 1 part by weight of the organic nucleating agent relative to 100 parts by weight of the polylactic acid resin, the polylactic acid resin compositions have good Sc, $\Delta$Hmsc and $\Delta$Hc but have remarkably increased amounts of linear oligomer. This results in significant deterioration of the thermal stability of the polylactic acid resin composition and the appearance and the impact resistance of its molded product.

In Comparative Example 6 which did not add any organic nucleating agent but added only an inorganic nucleating agent (talc), the polylactic acid resin composition has Sc of less than 80%. This results in deterioration of the molding processability and the heat resistance of a molded product.

Industrial Applicability

The polylactic acid resin composition obtained according to the invention has the excellent thermal stability, the excellent molding processability, the excellent heat resistance the excellent mechanical properties and the good appearance of a molded product and is thus preferably used as a raw material of molded products such as fibers, films and resin molded products.

**Claims**

1. A polylactic acid resin composition, comprising an organic nucleating agent (B) in addition to a polylactic acid resin (A) comprised of a poly-L-lactic acid component and a poly-D-lactic acid component, wherein
0.15 to 0.90 parts by weight of the organic nucleating agent (B) is added relative to 100 parts by weight of the polylactic acid resin (A),
the polylactic acid resin composition satisfying following (i) to (v):

   (i) amount of a linear oligomer of L-lactic acid and/or D-lactic acid included in 100 parts by weight of the polylactic acid resin composition is equal to or less than 0.3 parts by weight;
   (ii) rate of weight-average molecular weight retention is equal to or greater than 70% after the polylactic acid resin composition is retained in a closed state at 220°C for 30 minutes;
   (iii) degree of stereocomplexation (Sc) of the polylactic acid resin composition meets an Equation (1) given below:

   $$\mathrm{Sc}= \Delta \mathrm{Hmsc}/\left(\Delta \mathrm{Hmh} + \Delta \mathrm{Hmsc}\right) \times 100 > 80 \qquad (1)$$

   (wherein $\Delta$Hmsc represents a stereocomplex crystal melting heat quantity (J/g) and $\Delta$Hmh represents a sum of a crystal melting heat quantity (J/g) of a poly-L-lactic acid single crystal and a crystal melting heat quantity (J/g) of a poly-D-lactic acid single crystal);
   (vi) the stereocomplex crystal melting heat quantity $\Delta$Hmsc is equal to or greater than 30 J/g; and
   (v) cooling crystallization heat quantity ($\Delta$Hc) is equal to or greater than 20 J/g in DSC measurement that increases temperature of the polylactic acid resin composition to 240°C, keeps at a constant temperature of 240 °C for 3 minutes and decreases temperature at a cooling rate of 20°C/ minute.

2. The polylactic acid resin composition according to claim 1, wherein the amount of th linear oligomer of L-lactic acid and/or D-lactic acid is equal to or less than 0.2 parts by weight included in 100 parts by weight of the polylactic acid resin composition.

3. The polylactic acid resin composition according to either one of claims 1 and 2, wherein the rate of weight-average molecular weight retention is equal to or greater than 80% after the polylactic acid resin composition is retained in the closed state at 220°C for 30 minutes.

4. The polylactic acid resin composition according to any one of claims 1 to 3, wherein the polylactic acid resin (A) has a ratio of a weight of the poly-L-lactic acid component to a total weight of the poly-L-lactic acid component and the poly-D-lactic acid component, which is either in a range of 60 to 80% by weight or in a range of 20 to 40% by weight.

5. The polylactic acid resin composition according to any one of claims 1 to 4, wherein the polylactic acid resin (A) is a polylactic acid block copolymer.

6. The polylactic acid resin composition according to any one of claims 1 to 5, wherein weight-average molecular weight of either one of the poly-L-lactic acid component and the poly-D-lactic acid component is 60 thousand to 300 thousand, and weight-average molecular weight of the other is 10 thousand to 50 thousand.

7. The polylactic acid resin composition according to any one of claims 1 to 6, wherein the organic nucleating agent (B) is a metal phosphate.

8. The polylactic acid resin composition according to any one of claims 1 to 7, wherein 0.20 o 0.45 parts by weight of the organic nucleating agent (B) is added relative to 100 parts by weight of the polylactic acid resin (A).

9. The polylactic acid resin composition according to any one of claims 1 to 8, the polylactic acid resin composition further comprising a molecular chain linking agent (C), wherein 0.01 to 10 parts by weight of the molecular chain linking agent (C) is added relative to 100 parts by weight of the polylactic acid resin (A).

10. The polylactic acid resin composition according to any one of claims 1 to 9, the polylactic acid resin composition further comprising an inorganic nucleating agent (D), wherein 0.01 to 20 parts by weight of the inorganic nucleating agent (D) is added relative to 100 parts by weight of the polylactic acid resin (A).

11. The polylactic acid resin composition according to any one of claims 1 to 10, wherein stereocomplex crystal melting point (Tmsc) of the polylactic acid resin composition is 205 to 215°C.

12. The polylactic acid resin composition according to any one of claims 1 to 11, wherein weight-average molecular weight of the polylactic acid resin composition is 100 thousand to 300 thousand.

13. The polylactic acid resin composition according to any one of claims 1 to 12, wherein melting temperature is 220°C, and melt viscosity under condition of a shear rate of 243 sec$^{-1}$ is equal to or less than 1000 Pa.s.

14. A production method of the polylactic acid resin composition according to any one of claims 1 to 13, the production method comprising:

a first step of melt kneading 0.15 to 0.90 parts by weight of an organic nucleating agent (B) with 100 parts by weight of a polylactic acid resin comprised of a poly-L-lactic acid component and a poly-D-lactic acid component; a second step of crystallizing a mixture obtained by the first step at 70 to 90°C under vacuum or under nitrogen flow; and a third step of devolatilizing the mixture at 130 to 150°C under vacuum or under nitrogen flow, after the second step.

15. A production method of the polylactic acid resin composition according to any one of claims 1 to 13, the production method comprising:

a first step of melt kneading a poly-L-lactic acid component and a poly-D-lactic acid component with an organic nucleating agent (B), such that a mixing ratio of the organic nucleating agent (B) is 0.15 to 0.90 parts by weight relative to 100 parts by weight of a polylactic acid resin (A) obtained from the poly-L-lactic acid component and the poly-D-lactic acid component; a second step of crystallizing a mixture obtained by the first step at 70 to 90°C under vacuum or under nitrogen flow; and a third step of devolatilizing the mixture at 130 to 150°C under vacuum or under nitrogen flow, after the second step.

16. A molded product made of the polylactic acid resin composition according to any one of claims 1 to 13.

## INTERNATIONAL SEARCH REPORT

| | International application No. |
|---|---|
| | PCT/JP2012/005317 |

**A. CLASSIFICATION OF SUBJECT MATTER**
*C08L67/04*(2006.01)i, *C08K5/521*(2006.01)i, *C08K13/02*(2006.01)i, *C08L101/16* (2006.01)n

According to International Patent Classification (IPC) or to both national classification and IPC

**B. FIELDS SEARCHED**

Minimum documentation searched (classification system followed by classification symbols)
C08K3/00-13/08, C08L1/00-101/14

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-248162 A (Teijin Ltd.), 16 October 2008 (16.10.2008), claims 1 to 11; paragraphs [0058], [0063] to [0065], [0076] to [0077], [0082] to [0086], [0091] (Family: none) | 1-13,16 |
| Y | JP 9-12688 A (Toyobo Co., Ltd.), 14 January 1997 (14.01.1997), claims 1 to 2; paragraph [0008] (Family: none) | 1-13,16 |
| Y | JP 2004-332166 A (Toray Industries, Inc.), 25 November 2004 (25.11.2004), claims 1 to 3; paragraph [0024] (Family: none) | 1-13,16 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 November, 2012 (19.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/005317

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-120873 A   (Teijin Ltd.), 29 May 2008 (29.05.2008), claims 1 to 7; paragraphs [0004], [0044] to [0046] (Family: none) | 6 |
| A | JP 3-14829 A   (Mitsui Toatsu Chemicals, Inc.), 23 January 1991 (23.01.1991), entire text & US 5041529 A            & EP 368571 A2 | 1-16 |
| A | Nobuhiko YUI, "Studies on Synthesis and Properties of Polylactide Stereo Block-Copolymers as Novel Biodegradable Polymers", Yakugaku Kenkyu Shorei Zaidan Josei Kenkyu Seika Hokokushu 9, Advances in Pharmaceutical Sciences, 25 March 1993 (25.03.1993), pages 171 to 179 | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009179773 A
- JP 2003192884 A
- JP 2008258162 A

**Non-patent literature cited in the description**

- *Macromolecules,* 1996, vol. 29 (10